# Europäisches Patentamt

## European Patent Office

## Office européen des brevets

(19)

(11) Veröffentlichungsnummer: **0 244 660**
**A2**

(12) **EUROPÄISCHE PATENTANMELDUNG**

(21) Anmeldenummer: **87105227.0**

(51) Int. Cl.⁴: **H 04 N 7/137**

(22) Anmeldetag: **08.04.87**

(30) Priorität: **10.04.86 DE 3612139**
**01.07.86 EP 86108919**

(43) Veröffentlichungstag der Anmeldung: **11.11.87**
**Patentblatt 87/46**

(84) Benannte Vertragsstaaten: **AT BE CH DE ES FR GB IT LI NL SE**

(71) Anmelder: **Kehler, Waldemar, Dipl.-Ing., Silcherstrasse 20, D-7204 Wurmlingen (DE)**

(72) Erfinder: **Kehler, Waldemar, Dipl.-Ing., Silcherstrasse 20, D-7204 Wurmlingen (DE)**

(54) Relevanz- und irrelevanz-analytisch bereichsprädiktives Code-Modulations-Verfahren zur Bestimmung, Prädiktion und Übertragung (ir-)relevanter(Bild-)Signal-Gebiete durch lokale Differenzenbildung.

(57) Zeitaufwendige (periodische Bild-)Signal-Analysen werden verkürzt, wenn eine ausschließliche Übertragung neuer relevanter Informationen gelingt. Durch Speicherung vergangener (relevanter) Informationen bedürfen nur die zeitlich-örtlichen GEBIETE mit SIGNAL-RELEVANZ bzw. relevanter Signal-Änderung der (erneuten Analyse und) Übertragung. Aufgabe der Erfindung ist eine (IR-)RELEVANZ-BEREICHS-ANALYSE ZUR BESTIMMUNG VON (IR-)RELE-VANTEN SIGNAL-GEBIETEN. Irrelevanz-Gebiete benötigen jeweils nur einen STÜTZ-WERT. Gebiete relevanter Funktions-Änderung liefern zugehörige RELEVANTE OFFSETS. OFFSET-BEREICHE jeder Relevanz sind mit DOPPEL-PRÄDIKTIONEN definierbar.

BEREICHS-PRÄDIKTIONEN nutzen für ganze BEREICHE MINIMAL-CODIERUNGEN nach Prädiktion einer mehrparametrigen ERWARTUNGS-MENGE. Das liefert bereichsabhängig verkürzte Code-Längen auch für PCM-QUALITÄT! In jedem BEREICH kann man sukzessiv (z.B. top-down bis zum realen Funktionswert) fortfahren, sowohl örtlich-zeitlich als auch in der Luminanz, auch mit 1-bit-DOPPEL-PRÄDIKTIONEN.

Gespeicherte Bilder gestatten nun durch (punktweise) DIFFERENZEN-BILDUNG zu zeitlich-örtlichen Nachbarpunkten der Speicherung von XYZ-GRADIENTEN-BILDERN, wo-

ACTORUM AG

mit (IR-)RELEVANZ-BEDINGUNGEN auch als BINÄR-MUSTER markierbar sind. Dann werden LOKALE BEREICHE der BEWEGUNGEN und UNSCHÄRFEN zu zählbaren Bit-Mustern für die GEFÄHRDUNGS-BEREICHE und OFFSETS, die nun, präventiv ermittelt, genauer prädizierbar und als Speicher-Werte viel schneller auswertbar sind.

Bereiche enthalten RELEVANTE PUNKTE wie die (relativen) Extrema. STÜTZWERTE vergleichbarer Art sind auch als (SEGMENTIERTE = verteilbare, D-)PCM-CODES übertragbar. Sind OFFSETS (etwa) bekannt, so können im RELEVANZ-BEREICH ORTS-PCM-CODES mit direkt offset-abhängig reduzierter Länge vorgesehen werden.

Unvorhersehbarkeiten führen zu bottom-up-Codes. Die (IR-)RELEVANZ-SELEKTION durch Gradienten erlaubt SCHWERPUNKT-BILDUNG und (IR-)RELEVANZ-BEREICHS-CODES.

RELEVANZ- UND IRRELEVANZ-ANALYTISCH BEREICHSPRÄDIKTIVES CODE-MODULATIONS-VERFAHREN
ZUR BESTIMMUNG, PRÄDIKTION UND ÜBERTRAGUNG (IR-)RELEVANTER (BILD-)SIGNAL-GEBIETE
DURCH LOKALE DIFFERENZEN-BILDUNG.


V E R F A H R E N S - B E S C H R E I B U N G


I ) G R U N D L A G E N ,  S T A N D  D E R  T E C H N I K


Die Erfindung ist ein Verfahren zur Datenfluß-Reduktion bei Signalen. Lit./1/
enthält weitgehend den Stand der Technik. Die EP-0091979 (/2/) beschreibt zudem
ein "BEREICHSPRÄDIKTIVES CODE-MODULATIONSVERFAHREN MIT SIGNALADAPTIV REDUZIERTER
BIT-RATE". Jenes Verfahren wird durch Einbeziehung von DIFFERENZEN-BEREICHEN, wie
sie speziell FUNKTIONS-GRADIENTEN darstellen, nun verbessert. Das schließt ein:


1. P C M - C o d i e r u n g :
   Einem Auflösungs-Raster absolut punktgenau entsprechende digitale Codierung.


2. D P C M - C o d i e r u n g :
   Punktuelle Vorhersage eines Wertes (z.B. Luminanz), um den herum, zwecks
   Codierung der realen Abweichung, einige Quantisierungs-Stufen gelegt werden.
   Die Nummer der dem realen Wert nächsten Stufe wird codiert und übertragen.
   Beim "GESTEUERTEN QUANTISIERER" wird die Kennlinie durch vorhersehbare
   "AKTIVITÄT" (Luminanz-Änderung um den Prädiktions-Punkt herum) ausgewählt.


3. P u n k t - M e n g e n ,  S p r u n g f u n k t i o n ,  K o n t u r :
                                    - vgl. sinngemäß: Lit./5/, S.1 ff.
   a) Ein Gebiet ist zusammenhängend, wo die Luminanz-Differenzen der Umgebung
   (= Aktivität) gering sind ("HÄUFUNGS-PUNKTE" eines Gebiets ). - Lit./5/, S.3


   b) Ein (Luminanz-) SPRUNG liegt vor, wo die Funktions-Differenzen in einer
   kleinen Umgebung maximal (relevant) sind. Sprünge bilden die Grenze (Kontur)
   zwischen fremden Gebieten mit jeweils der Eigenschaft a). Die Auswertung zu
   prädiktiven Zwecken sollte zumindest in X- (Zeilen-) und Y-Richtung erfolgen.


   c) Konturen sind RELEVANTE INFORMATIONEN. Ihre Schärfe ist ein wichtiges
   Beurteilungs-Kriterium für die Bildqualität. Erfolgreiche Versuche, dazu die
   KONTURRICHTUNG aus benachbarten Bildelementen abzuleiten,sind bekannt und zu
   einer ADAPTIVEN PRÄDIKTION genutzt (/3/ +references). Auf die Relevanz der
   Kontur-Information und VORZUGSRICHTUNGEN DER PRÄDIKTION wird hingewiesen.

## 4. Superponierte Kennlinien (MADPCM)

O.g. prädiktive Verfahren nutzen nur absolut punktuelle MONO-PRÄDIKTIONEN.
In der DE-30 20 061 wird erstmals ein Codierverfahren beschrieben, das die
in einem Bildpunkt vorhersehbare (SPRUNG-)RICHTUNG als zu 3c (orthogonalem)
2. PRÄDIKTIONS-PARAMETER für optimierte Luminanz-Kennlinien nutzt /4/.

## 5. Bereichs- und Mehrfachprädiktion (BPCM)

In der EP-0091979 (/2/) beschreibt der Erfinder ein BEREICHSPRÄDIKTIVES CODE-
MODULATIONS-VERFAHREN MIT SIGNALADAPTIV REDUZIERTER BIT-RATE (BPCM), wonach
eine Funktion in einem BEREICH ihre Extrema annimmt (SATZ VON WEIERSTRASS).
Nach dem Konvergenzprinzip von CAUCHY (Intervall-Schachtelung) konvergiert
dies (sukzessiv) gegen kleinste Bereiche. Mehrparametrige ERWARTUNGS-FUNKTI-
ONEN, DOPPEL-PRÄDIKTIONEN (EXTREMA), das SUPERPOSITIONS-PRINZIP für ERWAR-
TUNGS-/RESTMENGEN, CODE-LÄNGENPRÄDIKTIONEN und SUKZESSIVE CODES sind genutzt.
Zudem werden der SPRUNG-FUNKTION, die jede KONTUR (Kante) im Bild darstellt,
korrekt 2 HÄUFUNGS-PUNKTE (2 Limites generell: DOPPEL-PRÄDIKTION) zugeordnet
mit ihnen zugeordneten (Halb-)Kennlinien, in Richtung der jeweils anderen
Prädiktion. Die andere Richtung ist (nahezu) redundant. Eine Prädiktion läßt
sich als REFERENZ-WERT (Nullpunkt) codieren, die andere als OFFSET dazu.
Was für Kanten (Grenzen natürlicher Bereiche) gilt, gilt natürlich für jede
Art OFFSET innerhalb jedes BEREICHS, als Grundlage des neuen Verfahrens.
Daher ist das Verständnis der BPCM auch für die neue Erfindung unabdingbar!
Wegen der Vielfalt der Anwendungen sei nur ein Standard-Weg beschrieben, der
eine empfangsseitige Verzögerung nach sendeseitiger Signal-Analyse enthält
(die Bezugszeichen im folgenden betreffen die Abschnitte der EP-0091979):

a) RELEVANTE STÜTZWERTE, Präcodierung als verallgemeinerte Prädiktion.
   Vorteilhaft ist eine Präcodierung und Übertragung von (PCM-) STÜTZWERTEN für
   einen Bereich, speziell seine EXTREMA - s. Ansprüche (im folgenden "A"): A1,
   A5a und Beschreibung (Abk.:"B-") B-II,3; sinng.: Satz v.WEIERSTRASS /5/,S.34.

   − vgl. Anhang, IV u. II

b) Codewort-Längenbestimmung und -Prädiktion für Amplituden-Bereiche.
   Die übertragenen Extrema schränken die Codewortlängen bereichsabhängig ein,
   sodaß eine PCM-Qualität und -Codierung mit weniger bit sogar schon bei einer
   festen Bild-Segmentierung (z.B. 16x16 Punkte) erreicht wird. Der (Luminanz-)
   Bereich jedes nicht weißem Rauschen entsprechenden (Bild-) Gebiets benötigt
   fast stets weniger als 8 bit für die volle PCM-Skala - A2c, A3, A4b, B-II,2.5.

2

c) Rauscharmut, Top-down- oder hierarchisches Prinzip als sukzessive Codierung.

Für alle (Bild-) Signale gelten, näherungsweise mit abnehmendem Störpegel zunehmend, die Gesetze über "ebene Punktmengen" - vgl./5/, S. 1ff. Nimmt man nun den genannten, über extremale Stützwerte präcodierten Primär-Bereich als ERWARTUNGS-BEREICH (EB), so liefert die Anwendung der BPCM für sukzessiv kleinere Bereiche, indem der (Werte-)Bereich immer enger geschachtelt wird, darin automatisch eine Top-down- (hierarchische) Codierung - A3, B-II,1.4.

- vgl. Anhang II,2

d) Ideale Erwartungs-Bereiche und -Mengen, Rest-Menge RM.

Nun kann (zudem) nach konventionellem Muster der ganze Bereich möglicher Prädiktionen den Primärbereich (EB1) beträchtlich einengen, speziell, indem ganze Punkte-Mengen und ihr Bereich aus der Vergangenheit übernommen oder anders, sogar innerhalb EB1, abgeschätzt werden können. Das liefert IDEALE ERWARTUNGS-BEREICHE bzw.IDEALE ERWARTUNGS-MENGEN (EM) - B-I,2.1 u.3.1. Jede EM ist eine quantisierbare bzw. quantisierte Menge für einen EB.

Liegt man außerhalb eines EB, so liegt man in einer REST-MENGE (RM), die nun zur EM wird (A6), in einem REST-BEREICH (RB) innerhalb präcodierter Extrema.

e) Das Konvergenzprinzip von CAUCHY, Minimal-Codes.

In allen stückweise quasistetigen Gebieten führt jene Top-down-(Bereichs-)Intervallschachtelung,gemäß dem mathematischen Konvergenz-Prinzip von CAUCHY (/5/, S.5, 32), prinzipbedingt zu Minimal-Bereichen, die im Falle von Punkt-Rastern natürlich nicht verschwinden, aber sehr klein werden können. Daraus folgen MINIMAL-CODES, die sich in ihrer Codewort-Länge ausschließlich an der Weite jener infrage kommenden Bereiche orientieren - A2c, A3, aA4b; B-II,2.5.

- Vgl. Anh. IV

f) Sukzessive Bottom-up-Codierung.

Wenn ein charakterisierendes bit "0" eine Rest-Menge indiziert (s.o.), so kann jede derartige Codewort-Null eine Codewort-Verlängerung, und damit eine Bereichs-Erweiterung des zu codierenden Bereichs ergeben. Anstelle der o.g. Top-down-Codierung liefert dies eine Bottom-up-Erweiterung und -Codierung.

- vgl. Abschnitt IV

g) Mehrdimensionale Bereiche, Entartung, mehrdimensionale Stützwerte.

Die Luminanz einer Bildfolge ist 4.Koordinate (L) des 3-dimensionalen Punkt-Raumes mit den Koordinaten x,y,z=t. In jeder Koordinate kann ein Bereich, sukzessiv kleiner werden und bis zum Punkt entarten: Der Inhalt dieses n-dimensionalen Raumes wird Null, also eine (Hyper-) Fläche (/5/, S.16) - B-II,1.1. Jede solche in einer Koordinate entartete Menge kann ein STÜTZWERT sein, der in den anderen Koordinaten aber immer noch eine Ausdehnung hat!

3

h) Offsets, Doppel-Prädiktion.

Örtliche oder amplitudenmäßige OFFSETS (Konturen) bilden Sprung-Funktionen. Aus der Vergangenheit lassen sich solche Sprünge oft recht genau vorhersagen. Dies führt in der Codierung auf die Tatsache, daß schon mit einem bit eine recht genaue Zuordnung zum einen oder anderen Limes der angrenzenden Gebiete codiert werden kann. Das führt zur DOPPEL-PRÄDIKTION als EM - A1, B-I,4.4. Auf vergleichbare Art wird, z.B. für ein mehrparametriges 4-Farb-Karo-Muster, auch eine MEHRFACH-PRÄDIKTION (incl. Präcodierung!) jener Stützwerte recht sinnvoll. Die kleinen Teil-Bereiche um die derart codierten Offset-"Kanten" können danach mit wenigen bit sehr fein codiert werden - B-II,2.4 u. 2.5.

5.1. Verschiebungs-Messung, Gradienten-Bereiche, eine Aufgabe der Erfindung. Punktuelle Verschiebungs-Messungen, z.B. über gefundene Korrelations-Maxima sind bekannt; ebenso Verschiebungs-Messungen über Felder des Z-Gradienten (Bild-zu-Bild-Differenz). Die Mängel jener Verfahren sind (feste) Blöcke und Meß-Fenster, die durch BPCM-Anwendung (sukzessiv) aufgelöst werden können!

5.2. N e u e _ A s p e k t e : Bewegungs-BPCM, Bereiche der Relevanz. Neben dem Luminanz- und Orts-EB muß noch der in EP-0091979 für eine Bewegung (I,4.2f.) erwähnte "Erwartungs- Bereich für die Änderung" erfaßt werden. Er reduziert sich, als Primär-Bereich EB1, z.B. auf Werte zwischen den Extrema des Verschiebungs-Winkels und des Betrags der Verschiebung (Ring-Sektor). Es sind auch signaladaptive BPCM-Bereiche wählbar (s.u.: III,3; V,3 bis V,5). Für die neue Erfindung bieten sich also GRADIENTEN als Basis für eine BPCM DER VERSCHIEBUNG an (vgl. BPCM-Anspr. 1,2,3 und Beschr. I,3.; II,2.5 ; II,3):
- Alle Verschiebungen müssen sich im Innern dieses EB1 befinden. Auch ein enger prädizierter EB kann zutreffen. Jeder in einem EB codierte Parameter bildet einen weiteren Stützwert in seinem Bereich (BPCM: II,3). Auch der BEREICH DER VERSCHIEBUNG in einem Gradientenfeld wird sukzessiv eingeengt.
- Der Gradient zeigt, wie jedes Differential, ORTE DER IRRELEVANZ (Nullstellen) an. Wo sich der Z-Gradient (bei Rauschen: im Mittel) nicht ändert, herrscht sogar ABSOLUTE IRRELEVANZ, d.h. es gilt die früher übertragene Information. Ansonsten zeigen Gradienten-Nullstellen bekanntermaßen RELATIVE EXTREMA an. Solche liefern, neben sonstigen markanten Punkten, RELEVANTE STÜTZWERTE, aus denen sich Bereichsfunktionen mittels BPCM besonders schnell rekonstruieren.
- Bild-BEREICHE sind segmentiert. Wesentliche Bild-Informationen hängen dabei weniger von absoluten Werten der Luminanz, als von bestimmten MERKMALEN, incl. GEBIETS-KONTUREN ab. Konturen sind über den X-Y-Gradienten besonders gut verfolgbar und liefern einfache Erwartungs-Bereiche (s.u.III,3; V,3-5).

4

5.3. <u>Beispiel</u>: Eine Veränderung hat den relativen Wert +5.

```
EB:                                              (4 5 6 7)

Punkt       16              -8      -4 -2  0  2  4 *   8           16

            x . . . . . . . x . . . x . x . o . x . x . . . x . . . . . . . . x

EB-Nummer:          -4          -3   -2 -1  1  2    3         4

EB-Weite:            8           4    2  2  2  2 ====4===       8

Codelänge:           4           3    2  2  2  2    3           4

(im EB)
```

a) Bisherige punktgenaue (Adress-)Offset-Codierung, statische Skala:
   VERSCHIEBUNGEN in Bild-Fenstern innerhalb von -16...+16 Punkten (= 31 Werte)
   werden mit 5 bit genau codiert. Dies sei eine Art (ORTS-) PCM. Eine (ORTS-)
   DPCM würde dagegen z.B. repräsentativ die angegebenen PUNKTE (x) codieren.
   Sie benötigt für 8 Werte 3 bit. Außerhalb dieses Bereichs (32) ist in
   beiden Fällen keine OFFSET-Codierung möglich (slope-overload)!

b) BPCM des Bereichs (als statische oder dynamische Skala gesehen):
   Erwartungs-Parameter (prädizierte incl. präcodierte Extrema, konventionelle
   Prädiktionen) begrenzen den Erwartungs-Bereich EB (=EB1) =EB-Nr.3. Handelt
   es sich um einfache GEFÄHRDUNGS-BEREICHE (s. auch UNSCHÄRFE) gem. Kap.III,V,
   so kann das Zutreffen für die gesamte Punktmenge als EM mit einem bit, z.B.
   dual "1", markiert sein. <u>Danach</u> spart man, bei <u>punktgenauen</u> 2-bit-Codes, nun
   3 bit: <u>Alle</u> Punkte 4...7 im Bereich werden binär (mit 00,01,10,11) codierbar!
   Falls innerhalb bekannter Extrema eines EB1 der RB zutrifft, muß man mit "0"
   den RM-CODE beginnen und erreicht <u>danach</u> mit o.g. 5 bit denselben Bereich
   wie im Fall a), incl. noch 4 zusätzlicher (programmierter) Punkte. Mit einer
   weiteren vorangestellten "0" könnte man sogar jenen Bereich erweitern!
   Natürlich spart man die "0" oder "1" für alle weiteren Codes im EB/RB. BPCM
   codiert beliebige ERWARTUNGS-BEREICHE (Luminanz,Ort,Verschiebung,Form,usw.)
   mit beliebig vielen Parametern und Dimensionen, auch sukzessiv.

- Gemäß BPCM(II,3) läßt sich eine EM, incl. z.B. superponierter Verschiebungen,
  an Stützwerten "aufhängen". Alle Erwartungsparameter wie präcodierte Grenzen,
  die bisherige Umgebung als EM, (im EB codierte) Stützwerte, konventionell
  prädizierte Adressen, Werte und Integrale, können auch eine "Bereichs-Weite"
  bzw. bereitzustellende CODE-LÄNGE definieren (EP-0091979-A1, S9, Pkt.2.4 ff.

5.4. <u>Neuer Aspekt</u>: Gradienten-Verfahren für BPCM (s.u. III, V - Anspr.1):
   Der Gradient liefert, speziell über meßbare UNSCHÄRFEN, GEFÄHRDUNGS-<u>BEREICHE</u>
   für VERSCHIEBUNG, RICHTUNG, und sogar jene der LUMINANZ (s.u. II, III, IV)!

## 5.5. Eine einfache sukzessive BPCM.

Man kann sich nun BEREICHE der IRRELEVANZ, vereinfacht, als große Quadrate vorstellen. Mit zunehmender RELEVANZ werden sie immer kleiner ("schärfer"). Immer ist ein sende- und empfangsseitig gleich arbeitendes Programm nötig!

- Hat man z.B. primär einige (Extrema als) RELEVANTE STÜTZWERTE adressiert und wertmäßig übertragen,so läßt sich dazu z.B. der jeweilige Gültigkeits-Radius R als Bereich (EB) für einen 4-bit-PCM-Code übertragen (Innen-Quadrat von R):

   a)  Liegt der Radius unter einem Bildpunkt, so liegt ein RELEVANTER OFFSET vor, der als RM eine BPCM-Codewort-Verlängerung (dort: II,1.4) auslöst und anschließend als RM-Code den OFFSET, z.B. mit vollen 8 bit, codiert.

   b)  Andernfalls wird jedes ganze Gebiet in R mit 4 bit absolut genau codierbar.

   c)  An der Seite jedes Rechtecks (als Gebiets-Rand!) kann man einen STÜTZWERT wählen und von da aus sukzessiv (nun in einem KREIS-SEKTOR) fortfahren.

   d)  So lassen sich z.B. Gültigkeits-Bereiche für 8, 7, 6, 5, 4, 3, 2, 1, 0 bit finden. In jedem Bereich läßt sich sukzessiv weiter verfeinern.

   e)  Letzteres entspricht GRADIENTEN- bzw. sog. HÖHEN-LINIEN und ist den Schwellwerten bzw. Umschalt-Punkten für Kennlinien (vgl. V,8) äquivalent.

## 5.6. Eine Top-down-Codierung als sukzessive BPCM, Sinn des Gradienten.

- Beliebige (IR-)RELEVANZ-GEBIETE sind nun mit einem bit markierbar. Ist ihr Fehler-Integral irrelevant, so wird das korrekt prädizierte Bild einer Folge mit 1bit/Bild codierbar. Nun sei es relevant: Das zweite bit gibt z.B. an, ob die linke Bild-Hälfte geändert ist. Wenn nicht, so ist es die rechte Hälfte und man braucht ein weiteres EM/RM-bit für die rechte Hälfte. Fährt man nun sukzessiv so fort, werden (Ir-)Relevanz-Gebiete selektiert (BPCM: II,1.4).

- Der RM-Code verlängerte sich hier selbst. Sind im betroffenen Bild Änderungs-Gebiete analysiert, so ist es Aufgabe der Erfindung den CODEWORT-LÄNGEN- bzw. GEFÄHRDUNGS-BEREICH (s.V,5 ff.) über Gradienten zu prädizieren: Die GRADIENTEN-PRÄDIKTION von OFFSET- bzw. KENNLINIEN-BEREICHEN, liefert die Codewort-Längen über gespeicherte Differenzen (Gradienten) und ihre Änderung.

- Eine Verallgemeinerung der Doppel-Prädiktion an Kanten ist eine MEHRFACH-PRÄDIKTION (z.B. Karo-Muster) der BPCM und allgemeinste Bereichs-Prädiktion: Wird eine ERWARTUNGS-MENGE oder ERWARTETE REST-MENGE nicht erreicht, so läßt sich der Grad der Annäherung, auch sukzessiv verfeinernd/vergröbernd (Netz), stufen (BPCM: Pkt.II,1.3; 1.4) indem man LOKALISATIONS-CODES, sowohl für die sukzessiv kleineren/größeren Mengen, bei RELEVANZ am Ende auch Punkte, darin überträgt. Unter Einbeziehung RELEVANTER PUNKTE (speziell relativer Extrema und Kanten, die über Gradienten bestimmbar werden) erhält man Stütz-Werte.

- Dies waren nur einige der extrem vielen BPCM-Varianten.

## II) INFORMATIONS-GEHALT DES GRADIENTEN

### 1. Gradienten-Bilder der Luminanz

Die X,Y,Z-Gradienten-Bildungen und ihr Informations-Gehalt sind bekannt. Dies gilt für unterschiedliche Signalfunktionen (Luminanz, Chrominanz z.B.). Neu ist die Extraktion prädiktiver Parameter für eine BPCM. - Dies sei für eine spezielle Funktion, die Luminanz, erläutert. RELEVANZEN der Luminanz stehen zudem bekanntermaßen lokal in enger Korrelation mit der Chrominanz, d.h. der RAND selektiert fast stets einen EB für beide Funktionen. Folgende Gebiete sind für eine BPCM der Originalfunktion und der Gradienten gegeben.

### 2. Statische Offset-Informationen

Folgende STATISCHE INFORMATIONEN liegen im GRADIENTEN (X,Y-Komponenten) und liefern folgende prädiktive BPCM-Information (Amplitude sei hier Luminanz):

Spur einer Kante (III, V,2 u. V,5):

a) Orte max. Amplitude : SPUR (RAND, ORTE) der OFFSETS

b) Streuung der Spur-Punkte : EB der voraussichtlichen ORTS-UNSCHÄRFE

c) Streuung der Spur-Werte : EB voraussichtlicher AMPLITUDEN-UNSCHÄRFE

d) Quer-Summe der Spur-Werte : wahrscheinlichster OFFSET der LUMINANZ

e) Richtung der max. Amplitude : wahscheinlichste RICHTUNG der Kontur

f) Richtungs-Streuung : EB des voraussichtl. RICHTUNGS-Sektors

g) Gebiets-Selektion : EB des von Konturen berandeten GEBIETS

h) IRRELEVANZ (GRADIENT/DIVERGENZ): Luminanz ca. (konstant/ k.-ansteigend)

i) Lokale Nullstelle im Bereich : RELEVANTER STÜTZWERT: max./min. Luminanz

k) Lokales Maximum (s. unter a) : ORT+WERT größter Luminanz-Steigung; -usw...

### 3. Dynamische Offset-Informationen

Weitere DYNAMISCHE INFORMATIONEN liegen im GRADIENTEN (X,Y,Z-Komponenten) und liefern eine prädiktive BPCM-Information aus dem Z-Gradient oder den beiden letzten X,Y-Gradienten, je nach Zweckmäßigkeit:

ORTS-OFFSET einer Kante (V,3; V,4)

a) X,Y-OFFSET v.max.Rand-Amplitude : wahrscheinliche SPUR der VERSCHIEBUNG

b) Streuung der Orts-Verschiebungen: EB der VERSCHIEBUNGS-UNSCHÄRFE der Spur

c) X-Y-Streuung der Z-Spur-Werte : EB der L-AMPLITUDEN/-OFFSET-UNSCHÄRFE

d) Quer-Summe der Z-Spur-Werte : Totale X-(Y-)Änderung in Z

e) Verschiebung der Extrema : wahrscheinlichste VERSCHIEBUNGS-RICHTUNGEN

f) Richtungs-Streuung rel.Extrema : EB des voraussichtl.RICHTUNGS-Sektors; -usw...

7

## 4. Prädiktor-Vorzugsrichtung und Gradient

Fehler durch Prädiktor-Vorzugsrichtungen sind schon in /1/ (3c) erwähnt: So werden waagrechte Kontur-Tangenten intraframe üblicherweise kaum erfaßt, da man meist nur einen Punkt in Y-, aber 2...4 Punkte in X-Richtung einbezieht. Eine orthogonale Doppel-Prädiktion der BPCM bringt bereits Abhilfe.

Neuer Aspekt: Ein gespeicherter X-,Y-GRADIENT liefert OFFSET, KONTUR- bzw. GRADIENTEN-RICHTUNG(s.III,3) was Genauigkeit und Geschwindigkeit noch weiter verbessert! Das gilt auch für prädizierbare VERSCHIEBUNGEN und die UNSCHÄRFE, sowohl bezüglich der ORTE (s. II u. V), als auch in der AMPLITUDE (Luminanz).

Aufgabe der Erfindung ist eine die BPCM weiter verbessernde Analyse, Bestimmung und Prädiktion von Signal-Bereichen über die Gradienten-Gebiete.

## 5. Relevanz-Selektion über Gradienten

Schwellwert-gesteuerte Selektion beliebiger Relevanz ist bekannt. Gradienten liefern bekanntermaßen die Relevanzen und Änderungs-Informationen in allen Richtungen (hier: x,y,z) und damit die RELEVANTE INFORMATION für irgendeine betrachtete Funktion. In Digital-Signalen liefert die maximale absolute PCM-Amplitude oder Adresse ("Orts-PCM") den normativen Bezugswert. Da in Analog-Signalen diese Referenz fehlt, bieten sich gem. /6/ auch Momentan-Amplituden oder Hüllkurven des Original-Signals und sogar Integrale, als Referenzen an. Der Gradient bietet nunmehr aber auch die Möglichkeit, ganze OBJEKTE bzw. EREIGNISSE in Form von BPCM-codierbaren Bereichen darzustellen. Dies sind im X-,Y-Gradienten vorwiegend Kanten-Linien (Konturen). Im Z-Gradienten ist es die Bild-zu-Bild-Änderung, speziell als (verallgemeinerte) VERSCHIEBUNG.

## 6. Stützwerte für interpolierende BPCM

Zwischen RELATIVEN EXTREMA, über die Gradienten-Nulldurchgänge lokalisiert, zeigt die BPCM besondere Vorteile: Zwischen je zwei benachbarten relativen Extrema bleibt die Funktion "monoton", d.h. in jedem dadurch definierten EB1 schließt jeder Teilbereich direkt ohne Überlappung sukzessiv an den anderen an. Jeder codierte Punkt dazwischen wird dadurch RELEVANTER STÜTZWERT (nur Rauschen kann einen propotionalen Überlappungs-Faktor erfordern).

Konturen sind geometrische Orte der Doppel-Prädiktion, der 2 Rand-Stützwerte je zwei natürlicher (rauscharmer) Gebiete, in Form von Hüll-Flächen, Linien, Extrema. Alle codierten STÜTZWERTE eignen sich besonders zu sukzessiver Bereichs-Prädiktion (BP) und -Codierung, auch in Form von Gebiets-Rändern.

## 7. Interpolierende Bereiche für BPCM

- Bereiche gelten selbst als irrelevant, wenn irgendein zwischen den gegebenen STÜTZPUNKTEN liegender Bereich korrekt abgeschätzt ist. Im einfachsten Fall werden Bereiche der Vergangenheit an den Stützwerten "aufgehängt". Auch bei fehlender Vergangenheit lassen sich SPRÜNGE,MONOTONIE(steigend/fallend) und beliebige Funktionen im Zwischen-Bereich als IRRELEVANZ-BEREICH abschätzen. Das sind punktuelle (lineare/planare) Entartungen des EB im o.g. Sinn (s.5g). Weicht die Realität davon irrelevant ab, so bedarf es keiner weiteren Übertragungs-Punkte und -Werte, andernfalls eines RM-Codes. Aufgabe der Erfindung ist es, durch ABGRENZUNG NATÜRLICHER (IR-)RELEVANTER GEBIETE über die Bestimmung von beliebigen DIFFERENZEN-BEREICHEN die BPCM zu verbessern.

- BEWEGT-BILDER erscheinen z.B. auch bei recht hohem Einzelbild-Rauschen noch subjektiv scharf. Die Werte der ungeänderten Flächen sind visuell gemittelt. Aber selbst bewegte Konturen erscheinen scharf. Das Auge positioniert sich z.B. sukzessiv genauer auf eine Kante (VERSCHIEBUNGS-BPCM) und erreicht offenbar über eine KANTEN-DOPPEL-PRÄDIKTION, daß der subjektiv scharfe Eindruck bei weitem die objektiv sehr unscharfen Einzelbilder übertrifft.

- Bewegungs-Schätzungen sind über GRADIENTEN auf einfachere Art möglich (V,4). Dabei wird die Orts- bzw. Kontur-Information, sowie die Bewegung (z.B. gem. V,3ff.) und deren UNSCHÄRFE (V,5) skzessiv verfeinerbar abgeschätzt.

- Jede Änderungs-Prädiktion aller OFFSETS streut erfindungsgemäß weit weniger, wenn GRADIENTEN den EB einer BPCM des Original-Signals abgrenzen. Ja, der GRADIENT selbst wird Gegenstand der (punktgenau möglichen!) BPCM (- Anspr.1).

- Viele Änderungen (d.h.das Verhalten der Komponenten des gesamten Gradienten) reduzieren sich auf gut prädizierbare sukzessive Additionen von KONSTANTEN, also (approximativ) einfachen Sprung-Funktionen als EM im Sinne einer BPCM. Einen EB bildet auch jede UNSCHÄRFE von etwa KONSTANTEN OFFSETS:

## 8. Quasikonstante Offsets

- EINBLENDUNGEN der Luminanz reduzieren sich auf die prädizierbare sukzessive Addition einer LUMINANZ-KONSTANTE (Z-Gradient!) über die gesamte Bildfläche!

- SCHWENKS bedeuten die Übertragung eines einzigen X-OFFSETS für alle Punkte.

- ZOOMING reduziert sich auf die Information, daß sich jeder Abstand von je zwei Punkten sukzessiv konstant abstands-proportional vergrößert.

- Senkrechte Rotationen ebenso (projektiv aber als Ellipsen-Funktion).

- Fehler-Korrekturen solcher OFFSET-PRÄDIKTIONEN erfolgen nun gemäß 5.3.!

9

# III) ELEMENTE DES NEUEN VERFAHRENS

## 1. Allgemeine Gradienten-Funktionen

a) Die IDEALE X-Y-GRADIENTEN-FUNKTION (Differenz-Funktion) jeder realen Kontur reduziert sich zu einer sehr scharfen Kontur-Linie mit dem Absolutwert des Luminanz-Sprunges, einer "Karrikatur" des Originalbereichs optisch ähnlich. SCHWELLEN-ÜBERSCHREITUNGEN bilden einfache SPRUNG-BEDINGUNGEN s.u. c); III,3.

b) Jede Differenz stellt einen definierten Sprung, den ALLGEMEINEN GRADIENTEN, dar, der sich äquivalent als lokale DOPPEL-PRÄDIKTION oder als eine MONO-PRÄDIKTION MIT OFFSET ergibt. Alle errechneten Differenzen können sofort in einem separaten Speicher abgelegt werden und bilden eine prädiktiv schneller auswertbare ALLGEMEINE GRADIENTEN-FUNKTION des Bildes. Der Prädiktionsbegiff enthält dabei auch die Präcodierung (BPCM: A1,B-3.1.)!

c) Jede reale Kante (Kontur) läßt sich sogar auf eine "IDEALE DOPPEL-PRÄDIKTION" reduzieren, der Vorhersage eines definierten (Luminanz-)Wertepaares für den (L-)BEREICH. Der GEFÄHRDUNGS-BEREICH für solche RELEVANTEN EREIGNISSE läßt sich grob gemäß IV 3c - IV 5 und dann feiner gemäß III 3c-h prädizieren.

d) Die Nutzung einer (orthogonalen) GRADIENTEN-PRÄDIKTION bietet sich nach allem an, denn der aktuelle Gradient, speziell ein voraussichtlicher Sprung ist damit meist in ungefähren OFFSETS (Ort, Amplitude) prädizierbar, wobei man sich zwangsläufig meist auf schon vorliegende Informationen beschränkt.

e) Eine SPRUNG-BEDINGUNG kann als Binärmuster B von TRUE/FALSE-Werten gemäß V,3c (auch aus Z-Gradient) gespeichert werden. Das genügt, um jene RELEVANTEN BILDPUNKTE im Bild als primären GEFÄHRDUNGS-BEREICH B zu lokalisieren. Ein codierter STÜTZWERT in B reduziert Gefährdungs-Bereiche auf X-Y-Gradienten: Der Ort des wahren Sprunges ist dann nur noch mit der reduzierten INTRAFRAME-UNSCHÄRFE (3 c) belastet, wobei die SPRUNG-WAHRSCHEINLICHKEIT im Originalbild bereits dann anzunehmen ist, wenn die SRUNG-BEDINGUNG "1" dort (Abb.) in B noch wenige Punkte entfernt ist. Die Stärke der Doppel-Prädiktion wird nun deutlich: Sie kann sowohl einen, als auch den anderen Eventual-Zustand, hier des Luminanz-Sprungs, zugleich mit 1 bit präventiv ab 1.RELEVANTEN PUNKT "+" innerhalb G vorsehen und relativ genau codieren, was scharfe Kanten liefert.

- Anschaulich werden (z.B. mit orthogonalen Gradienten) prädizierbare Sprung-Relevanzen, derart aus dem Momentan-Bild selektiert, dem übrigen wenig relevanten und mit Minimal-Codes codierbaren Bild (invers) superponiert.

10

## 2. Realisierung einer Sekundär-Prädiktion

Im folgenden wird zur Verdeutlichung von rauscharmen IDEAL-ZUSTÄNDEN ausgegangen:

a) In allen Bild-Bereichen ohne wesentliche Varianz liegt der X-,Y-Gradient (näherungsweise) bei Null. In solchen Fällen genügt die Speicherung einer einzigen Luminanz (L) für ein "zusammenhängendes" Bildgebiet in Form eines RELEVANTEN L-STÜTZWERTES (mit Streuung,BPCM B-I,4.8),der jenes repräsentiert. Es genügt prinzipiell, nur diesen für das Bildgebiet abzuspeichern. Jeder solche Stützwert kann die PRIMÄR-PRÄDIKTION eines L-Doppel-Prädiktors bilden. Wenige Minimal-Codes zwischen den Extrema genügen zur Abdeckung des Gebietes.

b) Die IDEALE GRADIENTEN-FUNKTION liefert jeden zugehörigen Offsetwert zur Realisierung einer SEKUNDÄR-PRÄDIKTION. Der Gradient einer Sprungfunktion ist in der Praxis umso unschärfer, je schlechter die Kontur (durch Codierung) realisiert wurde (V,5). UNSCHÄRFEN markieren einen BEREICH DER SPRUNGGEFAHR.

c) Um dort der SPRUNGGEFAHR zu begegnen,folgt die sukzessive Orts-Luminanz-BPCM: Ein jeweils genügend großer Bereich B um den PRÄDIKTIONS-PUNKT muß abgefragt werden. Der genaue Sprungort in jenem EB darf unbekannt sein. Anstelle der punktweisen Abfrage kann der wahre Ort innerhalb des EB direkt mit einem ORTS-PCM-Code, auch EB-sukzessiv oder zeitlich segmentiert, codiert werden. Außerhalb eines prädizierbaren Beobachtungs-Bereiches ("Bereichsprädiktives Verfahren"), der enger ist als G, geht die Sprung-Wahrscheinlichkeit gegen Null. Notfalls überträgt man in der REST-MENGE ein LOKALISIERUNGS-CODEWORT.

d) Liegen einmal mehrere Sprungfunktionen (Konturen) im Beobachtungs-Gebiet, so treten gem. BPCM mehrere Häufungspunkte auf. Sie sind mit der EIN-BIT-BEREICHS-CODIERUNG meist nicht mehr codierbar, doch jeder infrage kommende EB mit daraus prädizierter CODE-LÄNGE wird optimal eingeengt bzw. kurz.

e) Bei relativ zum Bildpunkt-Raster noch "geraden" Konturen ist INTRAFRAME der wahrscheinliche Ort extrapolierbar (ORTS-PRÄDIKTION 2f-3c). Die ideal genaue SPUR DES GRADIENTEN (Konturtangente) besitzt längs der X-Achse einen Ort X1 und längs der Y-Achse einen Ort Y1, wo der Gradient der Kontur maximal wird. Durch (lineare) Extrapolation läßt sich der Ort des wahrscheinlichen Sprunges leicht errechnen. Die Approximations-Gleichung lautet dy/dx=const. Der ORT DER DOPPEL-PRÄDIKTION ergibt die LINIE EINES EIN-BIT-MUSTERS. Das neue Verfahren codiert sie über BPCM, z.B. sukzessiv in GEFÄHRDUNGS-BEREICHEN über Z- und X-,Y-Gradienten, incl. der Einengung durch codierte Stützwerte.

f) Beispiel: Es gilt danach für einen gewählten Aufpunkt XO, YO die Formel:

$$(*) \qquad (XO - X1)/(YO - Y1) = (XO - X2)/(YO - Y2).$$

Mit XO = 0, YO = 0 als Ort der zuletzt übertragenen Zeile/Spalte vor dem Prädiktionspunkt P ergibt sich folgendes: Ist z.B. (X1;Y1) =(-8;-2) der Ort eines RELEVANTEN ORTS-OFFSETS, so ergibt sich als Ort des wahrscheinlichsten Sprunges der Punkt (X2;Y2) = (+4;+1) in der aktuellen Zeile. Die RELEVANTEN L-STÜTZWERTE bilden hier die mit 1 bit codierbare LUMINANZ-DOPPELPRÄDIKTION: 50(-), 200(+). -Kein früheres DPCM-System mit MONO-PRÄDIKTION erfaßte solche L-Bereiche, zudem mit einem bit! Die idealisierte Linie ist aber Element des gemäß 3c markierbaren Gefährdungs-Bereiches, also darin codierbar; letzterer wiederum ebenso in dem durch V,3c markierten Verschiebungs-Bereich!

```
          Spalte x =    -8      -4      0      +4

Y = -2:                 - + + + + + + + + + + + + + + +   H E L L (+)

                        :   *   :       :       :         Luminanz 200

Y = -1:                 - - - - + + + + + + + + + + + +

                        :       :   *   :       :

Y =  0:                 - - - - - - - - + + + + + + +

                        :       :       :   *   :

Y = +1 (aktuelle Zeile): - - - - - - - - - - P - - + + + +

          Ort des wahrscheinlichsten Sprunges:    (+4,+1)    Luminanz 50

Y = +2                  - - - - - - - - - - - - - - - -   D U N K E L (-)
```

## 3. Die Spur des Gradienten (Intraframe)

Der OFFSET (Gradient) jener Funktion hat folgende mit "O" markierte SPUR (*).

```
          Spalte x =    -8      -4      0      +4

Y = -2:                 - O - - - - - - - - - - - - - -   H E L L (O)

                        :   *   :       :       :

Y = -1:                 - - - - O - - - - - - - - - -

                        :       :   *   :       :

Y =  0:                 - - - - - - - - O - - - - - -

                        :       :       :   *   :

Y = +1 (aktuelle Zeile): - - - - - - - - - P = =(O)- - -   D U N K E L (-)

          Ort des (wahrscheinlichsten) Sprunges:   (+4,+1)

Y = +2                  - - - - - - - - - - - - - -
```

Für die Strecke P-(O) genügen Binärzähler zur Lokalisation im Spur-Gefährdungsbereich!

a) Obige Gradienten-Spur"O." entspricht wertmäßig dem OFFSET DER SPRUNGHÖHE.
Im vorliegenden Fall ist "O."= 150 der positive Wert des Sprunges. "O." ist
der RELEVANTE GRADIENT. Die Umgebung der Gradienten-Spur ist hier konstant.
Sie wäre dann IRRELEVANT. Generell gilt dies für alle UNGEÄNDERTEN BEREICHE.

b) Die IDEALE DOPPEL-PRÄDIKTION jedes (auch unscharfen) Offsets habe zwei
Werte L und H, dann gilt: Der (LUMINANZ-)WERT jedes Punktes im Bildgebiet R
(rechts der Gradienten-Spur, ggf.auf ihr) ergibt sich als einfache ADDITION
des (linksseitigen Luminanz-)Werts L und des OFFSET(Sprung-Gradient). Also
   (**)        H = L + "O."        im o.g. Beispiel:  H = 50 + 150   = 200

c) Jede KONTUR liefert so ihre spezielle ö r t l i c h auswertbare SPUR.
Sie ist i.a. jedoch nicht scharf, sondern verläuft etwa gemäß Pkt. V, 5A.
Sowohl in X-, als auch in Y-Richtung lassen sich auch GRADIENTEN-SCHWELLEN
binär codieren. Dies dient einer ungefähren L-Bereichs-Bestimmung der Kontur.
Im Gradienten-Speicher können später Umgebungs-Punkte jedes Prädiktions-
Punktes (P) aktuell auf die inzwischen sukzessiv errechnete Sprung-Bedingung
abgefragt werden: Es genügt, dazu einen vordersten Abfrage-Punkt (V) in der
X-Richtung nach jeder Übertragung um ein Stück weiter zu verschieben und in
V mehrere Y-Punkte abzufragen. Ein solcher Abfrage-Punkt soll im gefährdungsabhängigen VORHALT V zum aktuellen PRÄDIKTIONS-PUNKT (P) liegen (z.B. 4 bis
16 X-Punkte davor). Bis der Prädiktions-Punkt (P) diesen VORHALTE-PUNKT (V)
erreicht, ist die genaue Adresse in 16 Punkten mit 4 bit codiert. Nach dem
Auffinden des 1.Konturpunkts in 4 bit wird der EB ca. 2 bit enger - s. u.Abb.
(einfache DPCM-Prädiktoren schalten im folgenden Fall ca. 3 Punkte zu früh)!

KANTEN-INTRAFRAME-UNSCHÄRFE-BEREICH (allg.: Linien-Varianz-Bereich)

```
Zeile / Spalte:  x = -4  -2   0  +2  +4  +6  +8  +12
Y =-3:               - + 1 1 - - - ! - - - - - - - Y - -    SPRUNG-BEDINGUNG
   -2                - - - - + 1 1 ! - - - - - - - Y - -     "1" = TRUE, aus
   -1                - - - - - - + 1 1 - - - - - Y - -     X-,Y-Gradienten
    0                - - - - - - ! - - + 1 1 - - Y - -
   +1 (aktuelle Zeile): - - -(P)= = = =(*)=(V)- - (*)=ORTS-PRÄDIKTION,
                            = V O R H A L T = ........aus Z-Gradient
```

d) Ist das X-,Y-Binärwort bis "V" nicht Null, so liegt eine SPRUNG-GEFAHR vor.
Der X-GEFÄHRDUNGS-BEREICH in der Prädiktionszeile ist die Summe der Dual-Werte
in X-Richtung die nicht "1" sind. Werden im VORHALT V noch 4 Y-Gradienten
abgefragt, so können ab dem 5.bit z.B. noch TENDENZ und ÄNDERUNG DER OFFSETS
als Y-GRADIENTEN-EB für PUNKT V registriert werden. Die dortige LUMINANZ ist
außerdem im Bild-Speicher. Vereinfacht zusammengefaßt ergibt sich folgendes:

13

- Vergangene VERSCHIEBUNGEN (P-V) liefern erwartete GEFÄHRDUNGS-BEREICHE - s.V,3ff.
- Ab VORHALTE-PUNKT V wird der X,Y-GRADIENTEN-BEREICH ausgewertet. Dort ist schon registrierbar: ABSTANDS- u. WERTE-BEREICHE (incl.Tendenzen); darin: ORTE,WERTE.
- "1"-Werte (Z-,Y-,X-Gradient) bedeuten eine SPRUNG-GEFAHR in Y bzw. X-Richtung.
- Bis zum Herannahen (in P) ist die BEWEGUNGS-FRONT(*) gem.c) übermittelt und
- Im VORHALTE-RECHTECK (X x Y) wird o.g. GEFÄHRDUNGS-SPUR (+ 1 1 -) markiert, d.h. nach dem Auffinden des 1.Konturpunktes in 4 bit wird der EB hier 2 bit enger. Statt dieser natürlichen Sukzession kann man z.B. sukzessiv halbieren/verdoppeln. In BILD-/ZEILEN-FOLGEN bilden solche GEBIETE eine BPCM-ERWARTUNGS-FUNKTION.
- Den L-OFFSET entnimmt man als DOPPEL-PRÄDIKTION P(min), P(max) aus dem Speicher.

e) Die punktgenaue Bestimmung der X,Y-Gradienten-Komponenten würde, sogar für sich alleine(!), die Ermittlung der Momentan-Luminanz durch INTEGRATION (Summierung) ab einem beliebigen vollständig bekannten Punkt erlauben. Diese nötige Punktgenauigkeit ist jetzt mit (sukzessiver) BPCM prinzipiell möglich!

f) Im folgenden sind einfachste BPCM-BEREICHE irgendeiner Funktion beschrieben: Invers zu I,5.5 zeigt Abb. II,1 (Anhang) wie bei t = 5, bei einem VORHALT-BEREICH von 2 Intervallen (=Delta t) ein AMPLITUDEN-BEREICH aus vorheriger Zeilen- oder Bild-Information auf einfache Art eine reine AMPLITUDENBEREICHS-PRÄDIKTION - P(min),P(max) = mögliche L-Doppel-Prädiktion - ermittelt wird. Eine DPCM-quantisierte reine L-FUNKTION wäre z.B. im Anh. Abb.III,1b: ((-)).

- s.Anhang, Abb. II,1 u. III,1b

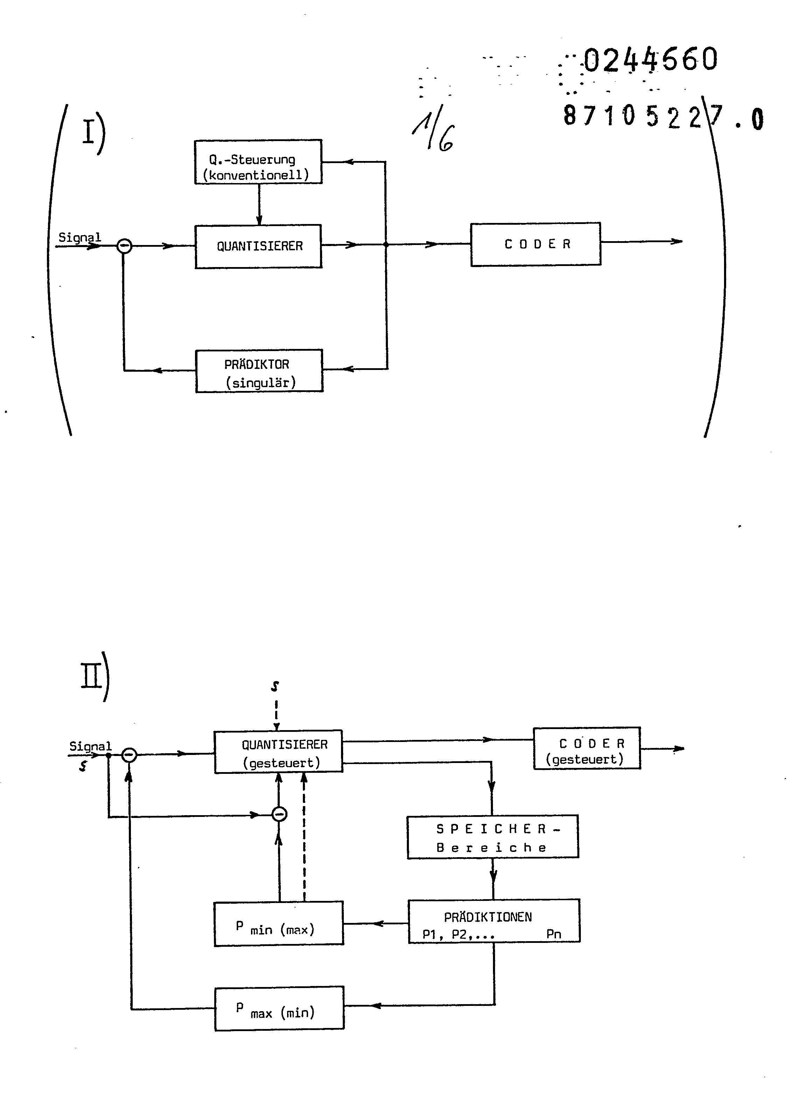

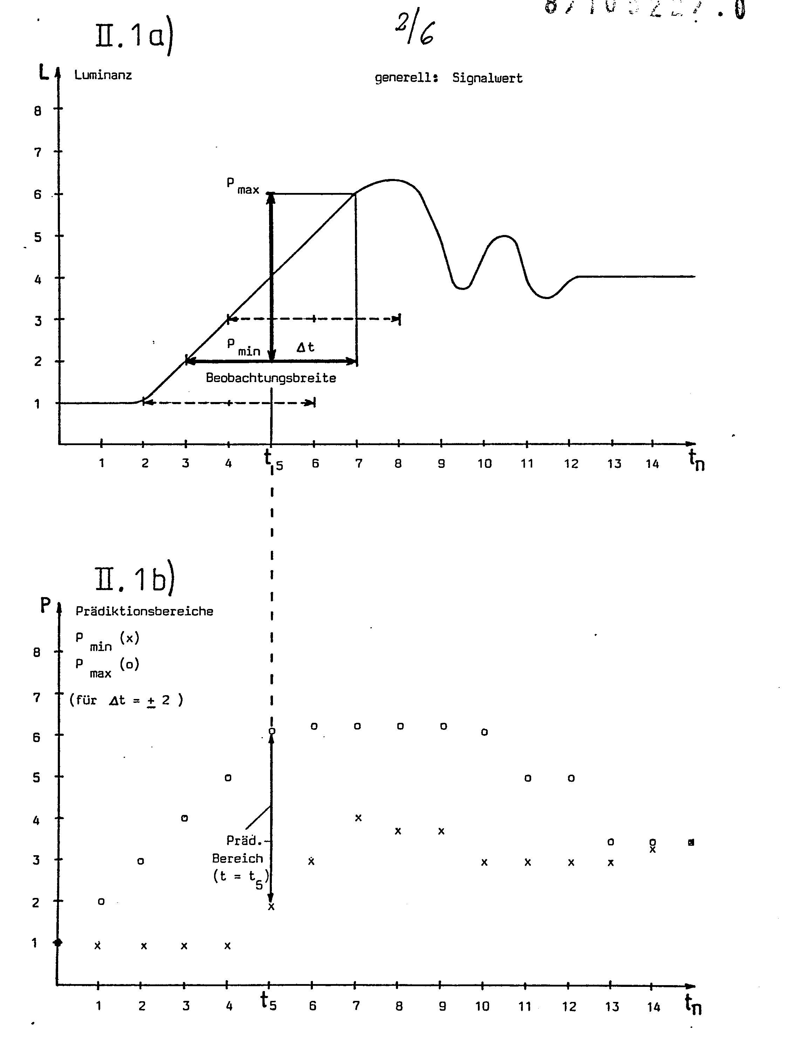

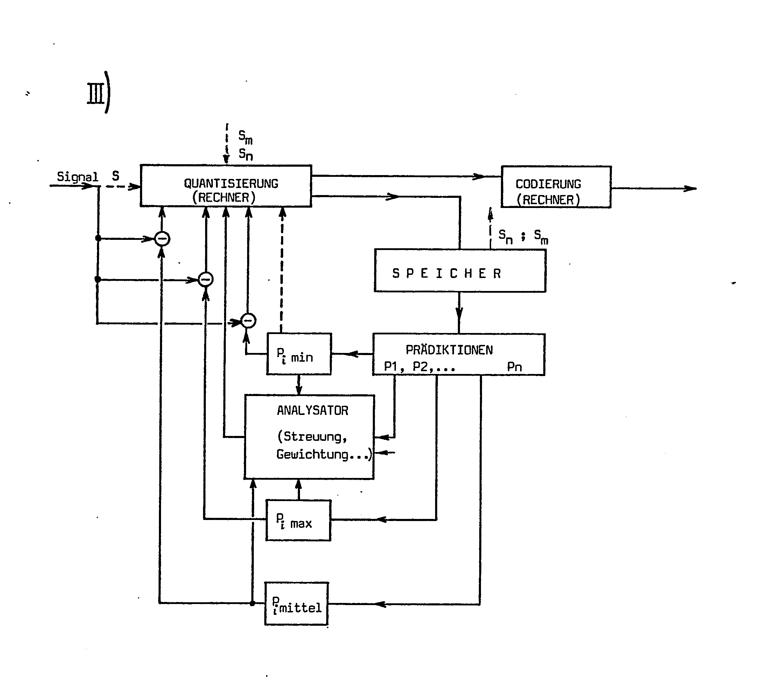

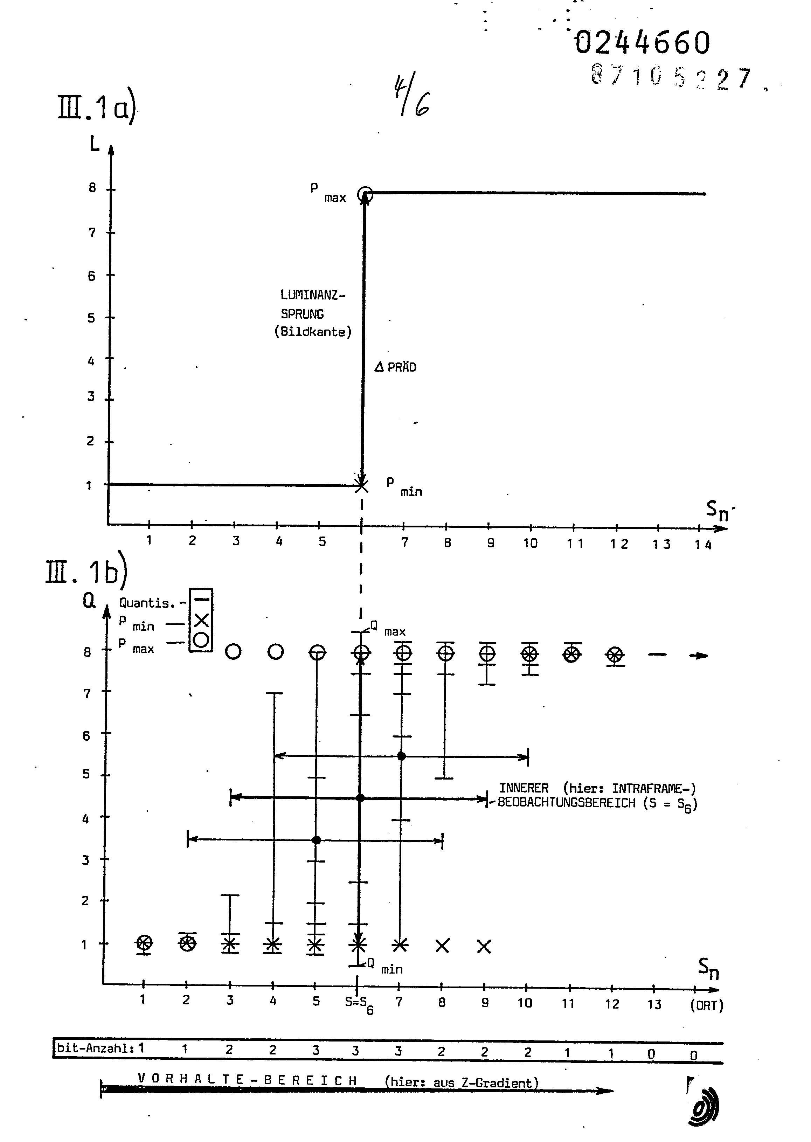

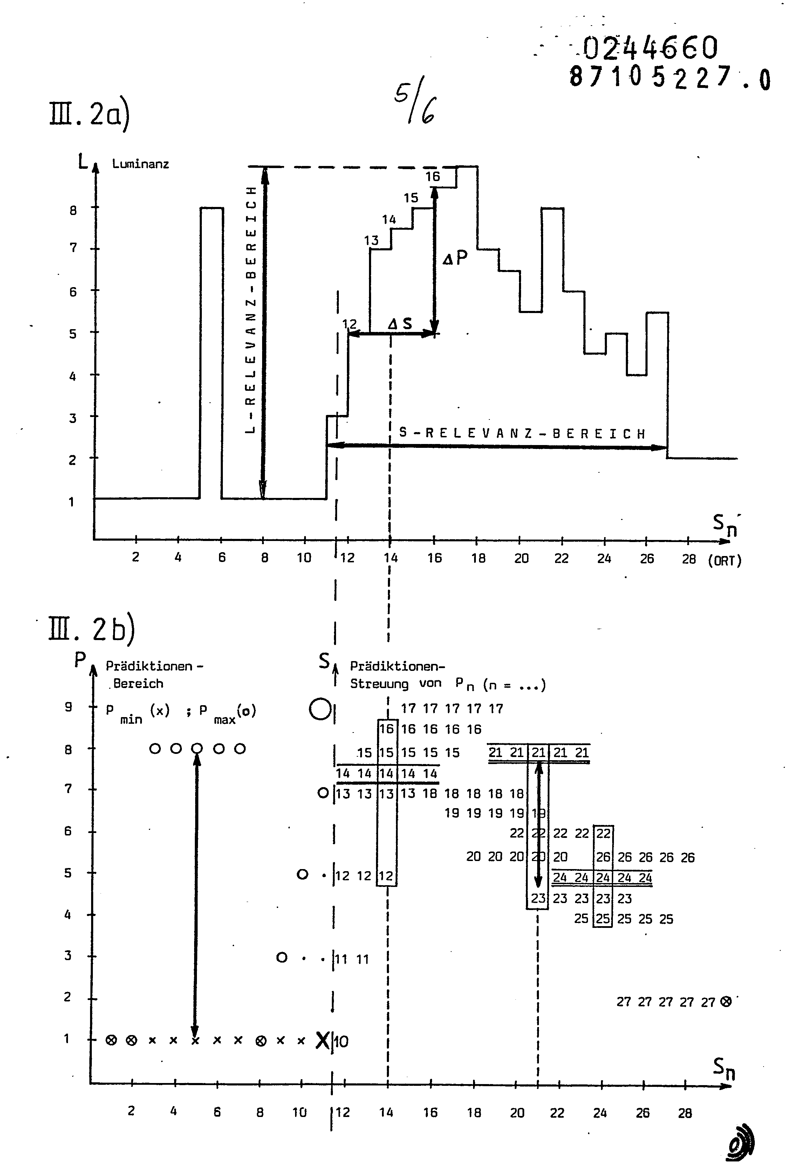

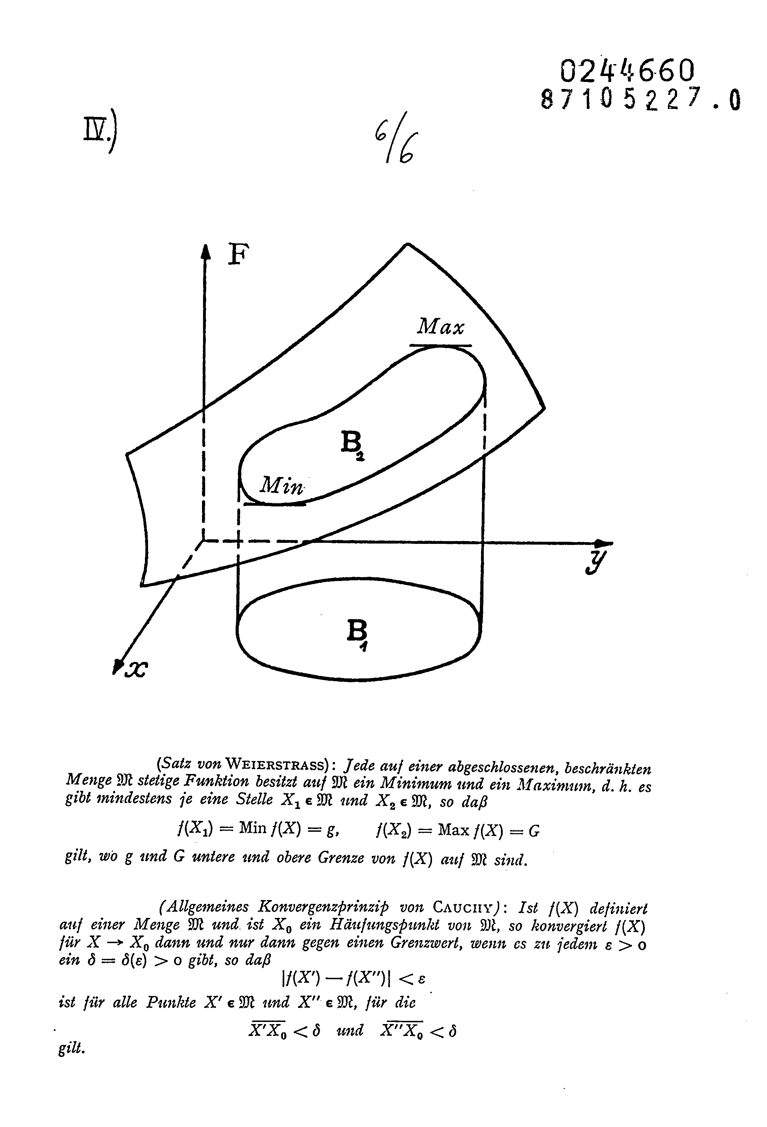

g) Eine recht einfache CODIERUNGS-FOLGE des sich gemäß d) nähernden Sprunges zeigt die Abbildung III,1b im Anhang. Beim Näherkommen der SPRUNG-GEFAHR im EB schaltet jener Coder von alternierenden Ein-bit-Codes auf drei bit um.

- s.Anhang, Abb. III,1b

h) In Abbildung III,2 im Anhang werden digitale Abtast-Werte angenommen: Danach enthalten die längs der STRECKE S (z.B. letzte Zeile) in den Punkten S(n) auftretenden Luminanz-Differenzen (Delta P / Delta S) alle Bereichs-Werte. Abb.III.2b zeigt die dazwischen liegenden Amplituden (senkrecht) in einem Beobachtungs-Bereich(Delta S). Waagrecht unterstrichen: aktuell reale Amplitude. Der Bereich impliziert alle entlang der vier Bildpunkte vorhandenen OFFSETS. BPCM-Schaltungen (III) können so die STREUUNGS-BEREICHE kommender Abtast-Intervalle prädizieren (auch präcodieren). Letztere engen Code-Längen für Ort und Amplituden immer mehr ein: Der CODER präzisiert sich (sukzessiv).

- s.Anhang, Abb. III ff.

Die neue GRADIENTEN-AUSWERTUNG selektiert RELEVANZ-BEREICHE (EB1: Abb.III,2a)!

14

i) Umgekehrt läßt sich zuerst der voraussichtliche AMPLITUDEN-BEREICH bestimmen. Trifft er zu, so kann man GEORDNETE AMPLITUDEN (vgl. I, 5.5) bzw. -OFFSETS den Orten zuordnen. <u>Jede</u> eindeutige ORDNUNG bildet direkt Code-Wort(-Teil)e. Man kann meist vereinfacht, statt o.g. Fläche, drei kommende Punkte in X-Richtung, Y-Richtung und den Diagonalen für OFFSET- und L-BEREICHE abtasten.

<u>BEISPIEL:</u> Willkürliches lokales Intraframe-Gebiet als Abtast-Bereich für L-Bereiche

```
Zeile / Spalte:  x = -2  -1   0   +1  +2  +3  +4

    -1                - - - E1  B1  C1  D1  F1  -   -

     0                - - - E   B   C   D   F   -   -

    +1 (aktuelle Zeile): -   A  (P)  =   =   =   =
```

## 4. Relevante Informationen, Ein-bit-Codes

Als RELEVANTE STÜTZWERTE gelten z.B. alle EXTREMA, aber auch invariante Gebiete!

a) Benötigen Bildgebiete wenig relevante Stützwerte (es gibt viele irrelevante Gradienten-/Differenzenwerte), so gibt es nur wenige Bildpunkte, die der Berechnung und Übertragung im Rahmen von (sukzessiven) RM-/EM-CODES bedürfen.

b) Speichert man die relevanten Stützwerte ab, so erhält man einfache lokale Referenz-Werte, momentane Nullpunkte, auf die man sukzessiv (doppelprädiktiv) aufbaut, speziell Primär-Werte/Orte für Doppel-Prädiktionen an Konturen. Anschaulicher wird man sukzessiv erst den Orts-, dann den L-Wert <u>im Bereich</u> zentrieren und prüfen, ob / wie man eine ganze Umgebung(EM) daran "aufhängt".

c) Speichert man dafür die RELEVANTEN DIFFERENZEN (Luminanz/Ort), so erhält man alle Bereichs-Parameter(DOPPEL-PRÄDIKTIONEN). Prädizierbare EB(-Weiten) sind oft, selbst bei Divergenz, mit nur einem bit codierbar! Für 1-bit-EM-Codes wählt man als EB (vgl.I,5.5) zulässig große (INNEN-)BEREICHE und segmentiert sie durch B-Prädiktion und (oder darin) codierte Stützwerte weiter so, daß man den EB zwischen je 2 Extrema kleinerer OFFSETS damit (quasi)interpoliert. Kommen mehr als je zwei Häufungs-Punkte als Prädiktionen infrage, so wird der wahrscheinliche Wert oft aus dem früheren GEOMETRISCHEN ORT bestimmbar.

d) Speichert man daraus, z.B. als lokales TRUE/FALSE-Bitmuster, oder auch ggf. als Direkt-"Adressen", alle Bereiche aller RELEVANTEN EREIGNISSE neben RELEVANTEN STÜTZWERTEN und/oder RELEVANTEN OFFSETS ab und bestimmt daraus lokal GEFÄHRDUNGS-BEREICHE, so erhält man für die sukzessiv weitere, auch <u>segmentierte</u> BPCM-Codierung ausreichende (IR-)RELEVANTE INFORMATIONEN.

15

# IV) _S U K Z E S S I O N _ - _ S C H W E R P U N K T - Q U A N T I S I E R E R

1. Unvorhersehbarkeit: Sukzession bottom-up,top-down; Doppel-Prädiktion; Schwerpunkte

Schließt man die (gemäß BPCM I,3) mögliche Präcodierung aus, so sind aus dem 4.Quadranden der Bildebene intraframe unvorhersehbare Ereignisse zu erwarten. Hier kann ein Codierer nach I,4 u. 5 abhelfen, der in homogenen Bildgebieten eine symmetrische Kennline hat und speziell nach tendenziell gleichen Codes ("+","+") das Werte-Verhältnis +2/-1 mit zunehmender Weite (bottom-up-/ top-down-Bereichs-Erweiterung) codiert. Zusätzlich können, speziell während alternierender Codes, STATISTISCHE MITTEL erfindungsgemäß als zutreffende Werte angenommen werden. Letztere sind auch durch einen Bereich ersetzbar!

```
                                                +:
    EIN-BIT-CODIERTER                            :
    LUMINANZ-SPRUNG(X)                           :
                                                 :
                                                 :            +:
                                                 :             :      :C
        ((A))  X     X     X     X     X :  X+:C  X     X*:=Q X*:=Q
                                         :      :    +:C=Q -:C    +:
               X                     +:C=Q *:=Q  *:=Q    :
                                         :    :     :    -:
               X                         :    :    -:
                                         :    :
               X                         :   -:C
                                         :
               X                         :       BEREICHS-PRÄDIKTION
                                         :       bei Unvorhersehbarkeit:
               X             +:C=Q *:                Signalgesteuerte
                              :    :                 eindimensionale Sukzession
               X              :    :                 hier: bottom-up, top-down
                              :    :                 und bereichs-überlappend
               X    +:C=Q *:  -:                     mit Schwerpunkt-Bildung
   +:C   :  X+:C  +:   +:C  :    :                   als 1-bit-Codes einer
  X*:=Q *:=Q  *:=Q X*:=Q X*:=Q  *:   -:              DOPPEL-PRÄDIKTION (+..-)
   -:   X-:C  -:   -:C  -:   -:


  ---!-----!-----!-----!-----0-----!-----2-----!-----4-----!-----6----- ZEIT/ORT
```

## 2. Wirkungs-Prinzip

Bei unvorhersehbaren Sprüngen (Offsets, Bereichen) versagen Prädiktionen. Dasselbe gilt natürlich in Bild-Folgen, z.B. an den Bild-(Gebiets-)Grenzen. Die Abbildung zeigt die Wirkungsweise eines MEHRFACH ADAPTIVEN SCHWERPUNKT-QUANTISIERERS bei prädiktionsfreier Ein-bit-Codierung. Die als zutreffend übertragenen Code-Werte sind mit "C" (=CODEWORT) bezeichnet. Quantisiert sei implizit der Punkt "Q". Man gibt dem Coder folgende Eigenschaften:

a) Solange ein Signalgebiet Irrelevant ist, kann trotz Rauschens jeweils ein QUANTISIERUNGS-SCHWERPUNKT(*) angenommen werden (s.o.:"Q"). Er kann implizit Gewichtungen, Superpositionen oder Code-Längen(!) enthalten und ist z.B. als EINHEIT bzw. OBJEKT mit dem Merkmal "IRRELEVANZ-BEREICH" codierbar.

   = Alternierende Codierung einer EM.

b) Liegt die TENDENZ des Signals in zwei benachbarten (Abtast-)Intervallen monoton gleich (z.B.: "+"), so wird der BEREICH (+,-) sukzessiv bis zu einem Maximum erweitert. Im Beispiel wurde die Wertezahl (:) jeweils verdoppelt.

   = Ein sukzessiver RM-Code der BPCM.

c) Ab dem EREIGNIS "Sprung" kann eine bisherige Quantisierer-(Un-)Symmetrie sende- und empfangsseitig identisch geändert werden. Außerdem kann statt des Schwerpunktes der Randwert realisiert werden (Q = C). Auch Änderungen von Schwerpunkts-Definitionen für solche BPCM-BEREICHE sind programmierbar.

   = Variante der MADPCM (s.I,4).

d) Sende- und empfangsseitig kann die KONVENTION bestehen, daß, sobald der Realwert dem "Schwerpunkt" nahe ist, (wieder) ein Vorzeichen-Wechsel codiert wird. Im gleichen Fall kann beim Erreichen einer gewissen Anzahl von Vorzeichen-Wechseln, (wieder) ein Wechsel der (Un-)Symmetrie erfolgen.

   = Variante der MADPCM (s.I,4).

e) Liegt die Signal-TENDENZ in (zwei) aufeinander folgenden Abtast-Intervallen (dann wieder) verschieden, so wird der Erfassungs-Bereich sukzessiv verengt. Die Einschwingzeit für Sprünge kann auch Quantisierer-spezifisch ermittelt werden. Speziell darf ein (IRRELEVANZ-)BEREICH die Funktion des Nullpunkts haben! Das Beispiel zeigt, wie nun UNVORHERSEHBARE EREIGNISSE codierbar sind.


f) Sukzessive BPCM kann schon in der FOLGE-PERIODE den L-EB lokaler Nachbar-Punkte im Zeit-Punkt "0" zur Korrektur des Einschwing-Fehlers nutzen: Schon im vorderen Bereich des Einschwing-Vorgangs ist die im Bild- (/ Gradienten-) Speicher abgelegte wahre Amplitude ((A)) (oder der L-Offset) zur genaueren SEKUNDÄR-PRÄDIKTION nutzbar. Der EB konvergiert gegen die Doppel-Prädiktion und verhindert damit die bekannte Fehler-Fortpflanzung der Mono-Prädiktion!

# V) DAS ZUSAMMENWIRKEN DER KOMPONENTEN

## 1. Aufgabe und Wirkung des Codierers

Das einfache EM/RM-Prinzip ist aus der BPCM bekannt. Auch falsch prädizierte BEREICHE sind danach sukzessiv korrigierbar! Eine Modifikation zeigte Kap.IV. Der beschriebene CODER-Teil einer Schaltung war auch, trotz der nur 2 Werte des einen bits, implizit in der Lage, drei Möglichkeiten zu codieren. Welche Möglichkeit zutrifft, wird er einem gespeicherten CASE-MUSTER, oder wie in IV,2 programmierten Vorgehens-Regeln, speziell TRUE/FALSE-Folgen, entnehmen.

## 2. Analysator und Prädiktor (Aufgabe, Wirkung)

Ein ANALYSATOR hat RELEVANTE BEREICHE selektiert und markiert. Die dortigen MERKMALE und/oder Signal-Werte (z.B.: Luminanz, Gradient) wurden jenen lokal zugeordnet (vgl.z.B.: III,3 und III,4 – ein Teil der Ermittlung prädiktiver Parameter fällt, zeitlich wenig gebunden, jenem BEREICHS-ANALYSATOR zu). Die PRÄDIKTION und -CODIERUNG der Bereiche ist nun sukzessiv weiter unterteilbar: Eine noch "langfristige Arbeit" kann man einem WARN-ANALYSATOR (III,3c: "V") übertragen. In dem im engen Gefährdungs-Gebiet nun sehr eng lokalisierbaren PRÄDIKTIONS-"PUNKT" (P) muß der eigentliche (L-) PRÄDIKTOR nur noch letzte erforderliche Ergänzungen durchführen: Bei der Adresse P wird ein PRIMÄR-PRÄDIKTOR dem (L-)Quantisierer, lokal genau codiert, jenen (L-)PUNKT(-HAUFEN) vorgeben, der das PRIMÄR-GEBIET charakterisiert. Jede OFFSET-PRÄDIKTION kann dem (L-)Quantisierer, sekundärprädiktiv, ebensolche HAUFEN bereitstellen. Der QUANTISIERER kann diese Informationen weiter zu einer QUANTISIERUNGS-MENGE, sogar unter Einbeziehung uncodierter Punkte gemäß IV, verwerten. - Diese Aufgaben- und Kriterien-Verteilung ist aber sehr weitgehend variierbar! Einige als MUSTER lange vorher ermittelbare und speicherbare Werte sind:
- ADRESSEN, SIGNALWERTE (Luminanz), viele prädizierbare OFFSETS, d.h. die lokal-wertmäßigen Abweichungen davon, zwecks örlich/wertmäßiger BP;
- Bereiche mit EXTREMA und ORTEN erster und letzter RELEVANZ über Gradienten.
- Prädizierbare GÜLTIGKEITS- und GEFÄHRDUNGS-BEREICHE für jeden EB der BPCM;
- BEWEGUNGS-OFFSETS und deren GEFÄHRDUNGS-BEREICHE gehören gemäß V,3 dazu.

Eine selektierende EB-PRÄDIKTION geschieht nun vorteilhaft über GRADIENTEN. Wie erwähnt, ist jeder Punkt/Wert in einem Bereich (sukzessiv) zentrierbar. Ist die ZENTRIERUNG (BPCM II,2.4) mit resultierenden sehr kurzen Adressen in einem (sukzessiven) EB unmöglich, kann die Umgebung als sukzessiv erweiterter RM-Code übertragen werden (IV). So wird jeder (relevante) Punkt codierbar!

## 3. Prädiktions-Parameter in Bildfolgen

a) In Bildfolgen sind vorhergehende Bilder überall als Referenz verwertbar, wo (noch) keine Bewegung vorliegt. Die WERTE gleicher Bild-Bereiche des vorigen Bildes dürfen bekanntermaßen solange punktuelle PRÄDIKTIONEN sein, wie keine Änderung erkannt wird. Man kann zur Rauschminderung (gewichtete) Mittelwerte aus der Vergangenheit bilden. Der zweite Bit-Wert signalisiert außerhalb des Rauschens liegende Unvorhersehbarkeiten im Beobachtungs-Bereich. Bekannte ÄNDERUNGS-DETEKTOREN nutzen primär Z-Änderungen, also Z-GRADIENTEN, vgl. 3c.

b) Ein X-, Y-Gradient zweier Folgebilder liefere hier folgendes BEWEGUNGS-BILD:

B I L D 1 : SPUR (*) ZUM ZEITPUNKT A mit Tangente (AAAA) ca. Y/X (s.u.!)

```
         Spalte x = -4      0      +4      +8      +12     +16     +20

Zeile               :       :      :       :       :       :       :

Y = -2:             - - - - - - - - A - - - - - - - - - - - - - - - - -

                    :       :      :    * :       :       :       :

Y = -1:             - - - - - - - - - - - A - - - - - - - - - - - - - -

                    :       :      :       :   *  :       :       :

Y =  0:             - - - - 0 - - - - - - - - - - A - - - - - - - - - -

                    :       :      :       :       :  *  :       :

Y = +1              - - - - - - - - - - - - - - - - - - A - - - - - -

                    :       :      :       :       :       :    * :

Y = +2              - - - - - - - - - - - - - - - - - - - - - A -
```

B I L D 2 : SPUR (*) ZUM ZEITPUNKT B:  X-Y-Verschiebung

```
Y = -2:             - - - B - - - - - - - - - - - - - - - - - - - - -

                    :   * :      :       :       :       :       :

Y = -1:             - - - - - B - - - - - - - - - - - - - - - - - - -

                    :       :  * :       :       I       :       :

Y =  0:             - - - - - 0 - - - B X X X X X X X * - - - - - - - -

                    :       :      : * :       Y       :       :

Y = +1              - - - - - - - - - - - - B - - - Y - - - - - - - -

                    :       :      :       :     * Y     :       :

Y = +2              - - - - - - - - - - - - - - - - - - B - - - - - - -
```

Vereinfachte Messung am OBJEKT "Kante" (bisher: Verschiebung korrelierender Punkte)

- Aus X-Y-Gradientenbildern gemäß b) werden alle BILD-ZU-BILD-VERSCHIEBUNGEN von Konturen deutlich. Die lokale Verschiebung der ganzen BEWEGUNGS-FRONT(*) von A nach B (statt konventionell einzelner PUNKTE!) ist oben näherungsweise durch die Folge (XXX..; YYY..) dargestellt. Die nur mit XXX.. dargestellte Strecke reicht approximativ sogar solange aus, um eine Bewegung darzustellen, wie die SPUR DES GRADIENTEN (AAA..;BBB..) nicht allzu horizontal verläuft. Eine solche Bestimmung von GEFÄHRDUNGS-BEREICHEN zwecks BPCM ist einfacher als die konventionelle Messung der VERSCHIEBUNG einzelner GEBIETS-PUNKTE!

c) Die bekanntere und einfachere Bildung der ZEITLICHEN Z-DIFFERENZ liefert im Ergebnis einen der o.g. X-Y-Gradienten-Differenz äquivalenten Z-Gradienten, der, im Gegensatz zum ersten, statische Konturen eliminiert (bewegtes Glas!):

```
        Spalte x = -4     0     +4    +8   +12   +16   +20
Zeile               !     !     !     !     !     !     !
Y = -2:           - - B 0 0 0 0 0 0 A - - - - - - - -   Bereich (Gebiet)
                    :   * o:o o o o o o o   :       :     für eine örtliche
Y = -1:           - - - - - B 0 0 0 0 0 0 0 A - - - - - BEREICHS-PRÄDIKTION
                    :       :   * o o o o o o o o   :       :       :
Y = 0:            - - - - - + - - - B 0 0 0 0 0 0 0 A - - - - - - - - - -
                    :       :       :   * o o o o o o o o   :       :
Y = +1            - - - - - - - - - - - - - B 0 0 0 0 0 0 0 0 A - - - - - -
                    :       :       :       :   *:o o o o o:o o o o:
Y = +2            - - - - - - - - - - - - - - - - - B 0 0 0 0 0 0 0 A -
```

## 4. Lineare Bewegungs-Prädiktion

Das neue Verfahren ersetzt aufwendige punktuelle Verschiebungs-Bestimmungen:

- Die Gradienten liefern die Änderungs-BEREICHE. Sie sind als BINÄR-MUSTER darstellbar und liefern dann leicht abzählbare Punkt- und Erwartungs-Mengen.
- Die Addition zur letzten Spur-Adresse "B" liefert den geometrischen Ort der größten Bewegungs-Gefahr, um den herum man, abhängig von der so ermittelten BEWEGUNGS-GEFÄHRDUNG, eine sinnvolle (z.B. 4-fach-)BEREICHS-PRÄDIKTION macht.
- Innerhalb jenes resultierenden EB, der z.B. einen Vorhalt V liefert, läßt sich weiter gem. III, 3c ff. vorgehen, d.h. die INTRAFRAME-UNSCHÄRFE liefert bereits engere Bereiche, sobald irgendein Kanten-Stützwert codiert ist.
- Nimmt man prädizierbare BEREICHE VON OFFSET und LUMINANZ längs der Kante hinzu, so zentriert sich die BPCM automatisch auf eine Korrelation mit dem früheren OBJEKT bzw. auf gewisse Minimal-Codes und ersetzt vektoriell exakte primäre Verschiebungs-Rechnungen. - Jeder codierte Wert wird BPCM-Stützwert!

20

## 5. Der X-, Y-Gradient bei unscharfem Sprung

### A) Luminanz und Sprung-Gradient bei mäßiger Übertragungs-Verfälschung

```
        Spalte x = -2      -1        0       +1       +2       +3       +4

Zeile               !       !        !        !        !        !        !

Y = -2:         140 +60 200  -   200  -   200  -   200  -   200  -   200  -

                    :       :        :        :        :        :        :

                   -40    -100      -60       :        :        :        :

                    :       :        :        :        :        :        :

Y = -1:         100  -  100 +40 140 +60 200  -   200  -   200  -   200  -

                    :       :        :        :        :        :        :

                    :       :      -40     -100      -60       :        :

                    :       :        :        :        :        :        :

Y = 0:          100  -  100  -  100  -  100 +40 140 +60 200  -   200  -

                    :       :        :        :        :        :        :

        voraussichtlicher Y-Gradient:        0      -40     -100      -60

                    :       :        :        :        :        :        :

Y = +1          100  -  100  -  100  -  (P)  - (P+1) - (P+2)   (P+3) -
```

### B) Luminanz und Sprung-Gradient bei flacherem Luminanz-Anstieg

```
        Spalte:  -2      -1        0       +1       +2       +3       +4

Zeile             !       !        !        !        !        !        !

Y = -2:       -  100 +10 110 +20 130 +40 170 +20 190 +10 200 +05 205  -

                  :       :        :   *    :        :        :        :

                 +05     +10      +20      +10      +05      +05      -05

                  :       :      * :       :        :        :        :

Y = -1:       -  105 +15 120 +30 150 +30 180 +20 195 +15 205 -05 200  -

                  :       :    *   :       :        :        :        :

                 +10     +10   *  +10      +05      +05       :        :

                  :       :    *   :       :        :        :        :

Y = 0:        -  115 +15 130 +30 160 +30 190 +10 200  -   205  -   200  -

                  :       :    *   :       :        :        :        :

                 +15     +10   *  +20       ?        ?        ?        ?

                  :       :    *   :       :        :        :        :

Y = +1        -  130 +10 140 +40 180  ?   P   - (P+1)    (P+2)    (P+3) -
```

Die Differenzen (Gradienten) liegen korrekt <u>zwischen</u> den Zeilen und Spalten!

21

Die Abbildungen zeigen die gegenüber Bild-Folgen(V,3c) etwas umfangreichere Auswertung unscharfer (Intraframe-)Informationen durch Gradienten-Bildung. Die IRRELEVANTEN OFFSETS Null sind weggelassen.

a) Die Auswertung aller Umgebungs-Punkte der Kante liefert eine GRADIENTEN-BP. Daraus folgen erforderliche CODIER-BEREICHE (CODE-LÄNGENPRÄDIKTION) für BPCM, sowohl örtlich als auch in der Amplitude. Bei voller (Bild-)Speicherung ist der Informationswert der Merkmals-Abfrage aus o.g. Analysator einer aktuell langsamen Berechnung im Prädiktions-Punkt zeitlich weit überlegen.

b) Die SPUR DES UNSCHARFEN GRADIENTEN(*) ist nicht so einfach lokalisierbar wie in V,3. Man kann in der Praxis die BIT-MUSTER von einer oder auch mehreren SCHWELLEN verwenden, die je ein III,3c bzw. V,3c entsprechendes Bild liefern. Die unterste Schwelle liefert den UNSCHÄRFE-BEREICH. Während Unschärfe im Innern von quasistetigen Bereichen subjektiv erlaubt ist, soll jeder OFFSET über seine Ausdehnung insgesamt stimmen. Folglich ist auch über SEGMENTIERTE CODES, z.B. bitweise Zerlegung bzw. Approximation der Bereichs-Information, sukzessive Top-down-Korrektur neuer Information möglich! Rein optisch sollte man diese bits mit zunehmender Wertigkeit interpretieren (Einblend-Effekt).

c) Die von MUSTERN angegebenen ORTE können bei gleicher XY-Speicher-Adresse von Signal und Gradient gleichzeitig auf Amplituden und/oder -Offsets analysiert werden, um für diese Art "MEHRFACH-PRÄDIKTION" Kennlinien-Bereiche (EB!) und ggf. QUANTISIERUNGS-SCHWERPUNKTE (Häufungs-Punkte) für jede EM festzulegen.

d) Folgende neue Aspekte eröffnen sich jetzt:
   1. Möglichkeiten der Gleich-Behandlung von Original- und Gradienten-Bild, wie weitere Differenzen-Bildung des Gradienten oder repräsentierender Schwellen.
   2. Integrabilität des genauen Gradienten G (s. math. INTEGRABILITÄTS-BEDINGUNG).
   3. Verbindung des Original-EB durch die Differenzen zu einem physischmathematischen GESAMT-(ANALYSE-)GEBIET, wie oben sichtbar.
   4. Relevanzabhängige EB-Selektion, Analyse, Übertragung und Resuperposition.
   5. Selektive Mittelwert-Glättung aller Gebiete geringer Relevanz, Schwerpunkt-Ermittlungen innerhalb kleiner Schwellen oder bei monotoner Alternation (IV).
   6. Zwischen je 2 Endpunkten eines GRADIENTEN-BEREICHS GB erweist sich jeder Original-Bildpunkt als STÜTZWERT des letzteren. Alle Funktionswerte liegen zwischen je 2 absoluten oder relativen EXTREMA (RELEVANTEN STÜTZWERTEN), und der jeweilige GB liefert direkt die erforderliche CODE-LÄNGE für alle VERKÜRZTEN PCM-CODES des Bereichs und alle seine (IR-)RELEVANTEN PARAMETER.

22

## 6. Rausch-Unterdrückung, Schwerpunkte

- Die Übertragung der (IR-)RELEVANZ-GEBIETE bedarf PROGRAMMIERTER ANALYSE, die im Fall des (sukzessiven) BPCM-Prinzips möglichst Rausch-Freiheit verlangt. TIEFPASS- und DIGITALE FILTERUNG sind bekannt. Alle SCHWERPUNKT-ERMITTLUNGEN sollten aber nur IRRELEVANTE BEREICHE (GB ca. konstant) betreffen, damit die SELEKTIVE RAUSCHMINDERUNG wünschenswerte Homogenität in INNEN-BEREICHEN ohne Relevanz-Verluste an Kanten liefert. IRRELEVANZ herrscht lokal, wo Gradient oder Divergenz ca. Null oder auch leicht monoton alternierend, sind. Werden, resuperponierbare relevante Offsets (Konturen, Gradienten) selektiert, so ist dort, wegen approximativer IRRELEVANZ des REST-BEREICHS, eine weitere im Sender und Empfänger identisch programmierte Glättung, umgekehrt auch die Relevanz-(Kontur-)Rekonstruktion (Schärfung im Kamm) desselben Gebiets erlaubt. Generell werden so gewisse nicht quantisierte Vorgänge übertragbar.

## 7. Segmentierte (D)PCM-Codes bei Irrelevanz

a) Sind (sukzessiv) für RELEVANTE STÜTZWERTE und/oder RELEVANTE OFFSETS deren RELEVANTE ORTE übertragen worden, kann man darauf weiter aufbauen. Da sich ein PCM-Wert auch segmentiert (4x2 oder 2x4 statt 1x8 bit) übertragen läßt, lassen sich relevante Stützwerte in konstanten Bild-Gebieten und an Kanten meist rekonstruieren. Mit zunehmender Irrelevanz werden die Werte exakter!

b) Ideale Kanten liefern im <u>Gradienten-Bild</u> Linien mit dem GESAMT-OFFSET der Sprunghöhe. Diese RELEVANTEN OFFSETWERTE lassen sich ebenso behandeln, wie ein RELEVANTER STÜTZWERT. Insbesondere kann längs der schon erkannten (vorhersehbaren) Kontur der (segmentierte, verkürzte) neue PCM-Stützwert, sogar präventiv im noch irrelevanten Gebiet, als Codewort für das neue Gebiet übertragen werden. Der genaue Ort im ORTS-EB wird zusätzlich bestimmt.

c) Bei durch Übertragungsfehler verschwommenen Kanten liefert deren dadurch segmentierte GRADIENTENSUMME den GESAMT-OFFSET. SEKUNDÄR-PRÄDIKTIONEN sollen damit insgesamt übereinstimmen (Stetigkeits-Bedingung). Deren Meß-Ort ist da, wo die Gradienten-Funktion (die Offsets) oder ein kleiner REPRÄSENTATIVER SCHWELLWERT lokal wieder approximativ irrelevant werden. Zu RESUPERPOSITION, also der REKONSTRUKTION nach SELEKTION, ist noch die hinreichende BESTIMMUNG der Spur von Konturen erforderlich, z.B. über den KAMM des Gradienten (s.u.). Die Gesetzmäßigkeiten ermöglichen es, damit (RELEVANTE) STÜTZWERTE und die OFFSETS als SEGMENTIERTE CODES zu übertragen und korrekt zu lokalisieren.

23

## 8. Gradienten-Schwellen, Divergenz

a) Differenzen der Gradienten(-Schwellen) liefern die verallgemeinerte DIVERGENZ D, auch in Schwellwert-Form. Ihr Vorzeichen-Wechsel (D-Nullstelle) liefert bekanntermaßen den KAMM der SPUR DES UNSCHARFEN GRADIENTEN, der damit für eine Rekonstruktion genauer lokalisierbar wird. Die Divergenz liefert, in Form der Gradienten-Änderung, zudem den Bereich einer Kennlinien-Änderung:

b) Die Verallgemeinerung der DOPPEL-PRÄDIKTION führte zur allgemeinen MEHRFACH-PRÄDIKTION der BPCM. Sie besteht z.B. bei vier REPRÄSENTATIVEN STÜTZWERTEN eines Bereiches "Vierparametriges Karo-Muster" aus einer EM von 4 L-Werten.

c) Der jeweilige L-OFFSET zwischen den 4 Schwellen definiert 3 GRADIENTEN-WERTE, ihre Unterschiede wiederum 2 DIVERGENZ-WERTE, allesamt ein MASS DER RELEVANZ. Bei unscharfen Sprüngen sind die Elementar-Offsets zu summieren (s.o.III,3e). Die (Schwellen des) Gradienten sind also das Maß der RELEVANZ der L-Änderung.
   - Führt man GRADIENTEN-SCHWELLEN, z.B. mit den Beträgen 2, 4, 8, 16, 32, 64, 128, incl. Vorzeichen und Null ein, so belegen diese Schwellen ein 4-bit-Muster im Bildspeicher. Damit lassen sich, je nach Auflösung, mehr oder minder grob ÄNDERUNGS-BEREICHE (ähnlich MASKIERUNGS-FUNKTION für Kennlinien-Bereiche des gesteuerten DPCM-Quantisierers I,2) für BPCM direkt abrufen. Im Gegensatz zur DPCM charakterisieren sie statt Punkten (sukzessiv) Bereiche. Die Bereiche örtlicher Offsets ergeben sich auf vergleichbare Art (s. I,5.5).

D I V E R G E N Z

```
Y = -2:      -   140 +60 200  -  200  -  200  -  200  -  200  -
             :       :       :       :       :       :       :
            -40 -60 -100 +40 -60 +60  :       :       :       :
             :       :       :       :       :       :       :

Y = -1:      -   100  -  100 +40 140 +60 200  -  200  -  200  -
             :       :       :       :       :       :       :
             :       :  -40 -40 -60 -100 +40 -60 +60  :       :
             :       :       :       :       :       :       :

Y = 0:       -   100  -  100  -  100  -  100 +40 140 +60 200  -  200  -
             :       :       :       :       :       :       :
             :       :       :       :  -40 -40 -60 -100 +40 -60 +60
             :       :       :       :       :       :       :

Y = +1       -   100  -  100  -  100  -  100  -  100  -  100 +40 140 +60
```

Die Zeile-/Spalte-Differenzen liefern den bereits unter V,5 beschriebenen GRADIENTEN, die bisherige L-Änderung. L-EXTREMA: (+/-)-Wechsel der DIVERGENZ!

9. Ziele und Anwendbarkeit des Verfahrens

a) Primäres Ziel ist die qualitativ sehr hochstehende Bild-Übertragung (in PCM-
Qualität) bei erheblich reduzierter Übertragungs-Rate. Realtime-Prozessing
von Bildfolgen wird durch eine Abbildung der natürlich-hierarchischen BPCM-
Bereichs-Strukturen auf ein Hardware-Prozessorsystem anzustreben sein:
Die top-down-strukturierte BEREICHS-ANALYSE und -PRÄDIKTION der sukzessiven
BPCM wird über die durch Gradienten natürlich selektierten Gebiete weiter
beschleunigt. Speziell zwischen präcodierten RELEVANTEN STÜTZWERTEN (Extrema)
und dazwischen exakt codierten einfachen Stütz-Werten zu DOPPEL-PRÄDIKTIONEN
(-PAAREN),konvergiert die BPCM rasch,da die Bereiche der Amplituden- und Orts-
OFFSETS bei Rauscharmut fast überlappungsfrei direkt aneinander anschließen.

b) Signal-Analysen können, zu Lasten von Speicherplatz-Aufwand, signifikant
beschleunigt werden, wenn die durch eine solche BPCM ermöglichte zeitlich
verteilte Verarbeitung (parallel processing) der unteren feineren Strukturen
erfolgt. Die verbesserte Übertragung von Bildern und Video-Konferenzen über
die digitalen Telefon-Leitungen (ISDN) bis hinunter zu 64 kbit sind Nahziele.
Dafür sind allerdings Übertragungs-Verzögerungen in Kauf zu nehmen.

c) Das Prinzip der (IR-)RELEVANZ-PRÄDIKTION läßt automatische Signal-Analysen
zu: Zeitintensive Bild-Analysen werden bei entsprechendem Speicher-Aufwand,
dem Anteil der darin analysierten MONOTONIE entsprechend, reduziert:
Alle Verfahren, bei denen mit hohem Rechen-Aufwand Bilder noch punktweise
automatisch analysiert werden, sind betroffen. - Als Anwendungs-Beispiel ist
die COMPUTER-TOMOGRAFIE zu nennen. Sogar bei CAD werden noch zeitaufwendig
punktweise Schattierungen für Volum-Modelle errechnet, obwohl große BEREICHE
identische Attribute erhalten. Wenn die Konturen im Rechner als Oberflächen-
oder Draht-Modell schon gespeichert sind, entfällt die Gradienten-Bestimmung.

d) Bedenkt man, daß BILDER (-FOLGEN) nur willkürliche Formen einer MEHRFACH-
PERIODIZITÄT (Bildfolge-Frequenz, Zeilenfrequenz moduliert mit INFORMATIONEN)
darstellen, so läßt sich umgekehrt auch ein unbekanntes Signal mit bekannten
oder analysierten Periodizitäten, oder einfach top-down, in (mehrere) Bild-
Formen bringen, die sich gebietsweise (stationär/dynamisch) darstellen.
Anstelle der Abweichungs-Codierung nur von einer LUMINANZ (DPCM) erfolgt die
Codierung der Abweichung von einem örtlich-zeitlich schon bekannten MUSTER,
innerhalb bereits bekannter Bereichs-Weiten (PCM-, Adress-Skalen). BEREICHE
lassen sich auf jeden Stützwert (Anfangs-/Rand-Bedingung) sukzessiv aufbauen!

25

# VI) EIN WEG ZUR REALTIME-VERARBEITUNG

Die Funktionen können -wegen V,9a- mikroprogrammierten Prozessoren zugeordnet werden, die, statt im Prädiktions-Moment, sofort nach Vorliegen der SIGNAL-WERTE mit der Analyse der Informations-Merkmale für kommende Prädiktionen beginnen, indem die beschriebenen Bottom-up-Strukturierungen gewählt werden:

- 1. WERTE-SPEICHERUNG (Luminanz L und/oder andere Merkmale) realisieren,
- 2. die WERTE-DIFFERENZEN G zu Nachbarpunkten (x,y,z) errechnen und speichern,
- 3. sie evtl. durch SCHWELLWERT-PRÜFUNGEN grob klassifizieren, EXTREMA suchen,
- 4. evtl.: DIVERGENZ D bilden,grob klassifizieren,Vorzeichen-Wechsel bestimmen,
- 5. daraus BEREICHE DER IRRELEVANZ (z.B. kleinster Schwellwert) bestimmen,
- 6. diese+BEREICHE RELEVANTER ÄNDERUNG (z.B.Kontur-Verschiebung 1bit-) markieren,
- 7. INTRAFRAME-GEFAHREN-BEREICHE bestimmen, abgrenzbar mit MEHRFACH-PRÄDIKTIONEN,
- 8. IRRELEVANZ-GEBIETE selektiv glätten (z.B. durch SCHWERPUNKT-BILDUNGEN),
- 9. (daraus) GEBIETE ABSOLUTER IRRELEVANZ (von L, G oder D!) ermitteln,
-10. ermittelte ORTE RELEVANTER ÄNDERUNG in den GEFÄHRDUNGS-BEREICHEN markieren,
-11. ZUORDNUNGEN treffen (z.B. Merkmal-, Adress-, Bildspeicherung der Werte),
-12. CODE-WORTE für BEREICHE bereitstellen (Länge sukzessiv bereichsabhängig,
-13. Vorab-Bereitstellung eingeschwungener Zustände (gibt scharfe Kanten -Kap.IV),
   - an Sprung-gefährdeten Orten: SEKUNDÄR-PRÄDIKTIONEN DES AMPLITUDEN-OFFSET,
   - (sukzessive) ZENTRIERUNG der Real-Werte in genannten ERWARTUNGS-BEREICHEN,
   - ggf. RM-Bereichserweiterung (bottom-up), entspr.Zentrierung darin (CODES),
   - im Sprung-Fall den LOKALISIERUNGS-CODE im (kleinsten) Bereich bereitstellen,
-14. PRÄCODIERUNG+SEGMENTIERUNG der CODES, signalabhängig eindeutig programmiert,
-15. STÜTZWERTE/BEREICHE(GROB) SUKZESSIV ÜBERTRAGEN, WERTE IN BEREICHEN CODIERT,
   c) Fall-gesteuerte ÜBERTRAGUNG ZEITLICH-ÖRTLICHER (SEGMENTIERTER D)PCM-CODES,
      ggf. nur in Form der sukzessiv übertragbaren (IR-)RELEVANTEN INFORMATIONEN
      dieser Muster-Matrix, ggf. incl.weiterer (Gefährdungs-)Bereiche mit RÄNDERN,
   d) ggf. SIGNALGESTEUERT ZUSAMMENGESETZTE CODES (Code-Längensteuerung vgl.
      Punkt 12 u.I,5) übertragen; - Die Punkte ab 3. sind z.T. optional!
-16. Empfängerseitig: REKONSTRUKTION aus gleichen STÜTZWERTEN, BEREICHEN und
      zugeordneten EM/RM-CODES nach sende-/empfangsseitig eindeutigem Programm.
-17. Beidseitig möglich: Einbeziehung von, durch konventionelle Prädiktionen (*)
      definierten, mathematisch n-dimensionalen Funktions-Bereichen (zusätzliche
      Bereichs-Einengung), unter Anwendung des EM/RM-Prinzips.

(*) Man beachte: "Prädiktionen" enthalten hier sonst jede Art der Präcodierung und umgekehrt; und BPCM-Aussagen gelten bitsparend nicht punktuell, sondern für alle Punkte zwischen den Grenzen (Extrema) sukzessiv kleinerer oder nebeneinander liegender Bereiche! Selbst Aussagen dürfen in prädizierten Grenzen streuen.

**F A Z I T :**

Anstelle der auf willkürliche X-Raster dx(i), oder ebene Raster da(i), mit i = 1, 2, 3..., bezogenen Darstellung dF/dx(i) oder dF/da(i) der Änderung der Funktion längs dem <u>festen</u> Raster-Intervall, versucht die BPCM nun eine auf das natürliche Funktions-Änderungs-Raster dF bezogene Darstellung, z.B.

dx/dF(p) oder da/dF(p), mit p = 1,2,3..., speziell über GRADIENTEN. Jene zeigen Änderungen, viel weitergehend als die Original-Funktion, an. Dabei ist zu beachten, daß Gradienten-Amplituden und allgemeiner noch Differenzen, jeweils als Doppel-Prädiktion der Originalfunktion erscheinen können. - Evtl.

Fehler-Gebiete RM sind durch BPCM sukzessiv auf die Real-Werte zentrierbar.


## L I T E R A T U R - V E R Z E I C H N I S

/1/ GALLENKAMP,W.: Digitale diensteintegrierende Fernmeldenetze der Zukunft; Professorenkonferenz 1985 im FTZ-Darmstadt, 1985; - dort S.113 ff.: MUSMANN,G.: Möglichkeiten der Fest- und Bewegtbildübertragung im 64-kbit/s-ISDN.
-

/2/ EP-0091979: Bereichsprädiktives Code-Modulationsverfahren mit signaladaptiv reduzierter Bit-Rate (KEHLER,W. - pat.)
-

/3/ ZSCHUNKE,W.: DPCM Picture Coding with Adaptive Prediction - IEEE Transactions on Communications, Vol. COM-25, No.11, 1977 p.1295ff.
-

/4/ DE-30 20 061: Mehrfach-adaptive Quantisierung eines Wertebereiches... (KEHLER,W. - pat.).
-

/5/ DUSCHEK,A.: Vorlesungen über höhere Mathematik,Bd.2, Springer-Verlag, Wien 1963
-

/6/ KEHLER,W.: Automatische Sprachanalyse und -synthese, Neue Zürcher Zeitung, Forschung und Technik, vom 12.3.1975

## P A T E N T - A N S P R Ü C H E

1. RELEVANZ- UND IRRELEVANZ-ANALYTISCH BEREICHSPRÄDIKTIVES CODE-MODULATIONS-VERFAHREN ZUR BESTIMMUNG, PRÄDIKTION UND ÜBERTRAGUNG (IR-)RELEVANTER (BILD-)SIGNAL-GEBIETE DURCH LOKALE DIFFERENZEN-BILDUNG, unter Nutzung der willkürlichen und natürlichen (lokal inter- und extrapolierbaren) Signal-Eigenschaften und -Periodizitäten (in Form zeitlich- örtlicher Wiederholungen der SIGNAL-MERKMALE

d a d u r c h    g e k e n n z e i c h n e t ,

daß die DIFFERENZEN zu (benachbarten Bild-)Signal-Punkten verwertet und, als zeitlich-örtliches MUSTER gespeichert, speziell in der nächsten Signal-Periode, zu einer zeitlich-örtlichen BEREICHS-PRÄDIKTION ZUKÜNFTIGER OFFSET- und/oder SIGNAL-WERTE und deren LOKALISATION herangezogen werden (BEREICHS-PRÄDIKTION des GRADIENTEN und durch GRADIENTEN), insbesondere zwecks ANALYSE, CODIERUNG und ÜBERTRAGUNG der so gewonnenen, noch in Form von ERWARTUNGS- und REST-MENGEN bezüglich jener Eigenschaften nun in mehrparametrigen Funktionen bereichsweise zusammenfaßbaren, neuen (IR-) RELEVANTEN INFORMATIONEN.

2. Verfahren nach Anspruch 1, dadurch gekennzeichnet, daß das dort definierte DIFFERENZEN-MUSTER in einem ANALYSATOR auf ein oder mehrere BINÄR-MUSTER, speziell 1-BIT-MUSTER, reduziert wird (insbesondere SCHWELLWERT- oder MINIMUM-MAXIMUM-GESTEUERT bzw. durch bereichs-prädiktiv bestimmte (Kennlinien-)BEREICHE, speziell markiert durch weitere 1-BIT-MUSTER) und über damit markierte GEBIETE für alle EREIGNIS-PUNKTE die Bestimmung und Speicherung RELEVANTER EREIGNISSE für eine (sukzessiv) bereichs-prädiktive CODIERUNG erfolgt, insbesondere über (RELEVANTE, extremale) STÜTZWERTE, DOPPEL-, MEHRFACH-, GRENZ-PRÄDIKTIONEN, die:

    a) ORTS-KOMPONENTEN (i.a.: X,Y,Z) gespeicherter Merkmale und Ereignisse,

    b) ORTS-VEKTOREN R(X,Y,Z) bzw. Gültigkeits-Radien der Merkmale und Ereignisse,

    c) AMPLITUDEN, speziell (über) AMPLITUDEN-DIFFERENZEN D(X,Y,Z),

    d) BEWEGUNGEN V(X,Y,Z), BESCHLEUNIGUNGEN B(X,Y,Z),

    e) daraus errechneten OFFSETS O(R), O(D), O(V),

in ihren ERWARTUNGS-(incl. UNSCHÄRFE- bzw. GEFÄHRDUNGS-)BEREICHEN

    f) daraus neu gebildete (MEHRFACH-)PRÄDIKTIONEN P(O,V,D,R), GEBIETS-BESTIMMUNGEN

    g) sowie einer SUPERPOSITION (incl. Selektion) der Komponenten und Bereiche, (erneut) die zeitlich-örtliche ANALYSE, MARKIERUNG, FESTSTELLUNG (ABWEICHEND) NEUER (IR-)RELEVANTER INFORMATION, deren MERKMAL-DEFINITION, Festlegung daraus resultierender QUANTISIERUNGS-BEREICHE zu Codierungs-Zwecken, QUANTISIERUNG, CODIERUNG, SPEICHERUNG (und ÜBERTRAGUNG) des neuen Merkmal-Satzes in Form von (sukzessiven) ERWARTUNGS- und REST-MENGEN(-CODES) durchgeführt wird.

3. Verfahren nach Anspruch 1 oder 2, dadurch gekennzeichnet, daß das definierte GEBIET bzw. ÜBERTRAGUNGS-MUSTER nach sende-/empfangsseitig identisch wirkenden Konventionen analysiert, bestimmt, begrenzt, prädiziert (incl. präcodiert), codiert, selektiert bzw. ausgewertet (rekonstruiert) wird, speziell über eine BEREICHSPRÄDIKTIVE CODE-MODULATION (ERWARTUNGS- UND RESTMENGEN-CODIERUNG), mit

- (sukzessiven) BEREICHS- und abhängigen CODE-LÄNGENPRÄDIKTIONEN (verkürzte Codes!), incl. sukzessiver BEREICHS-ERWEITERUNG/-EINENGUNG,-TENDENZ-,RICHTUNGS-BESTIMMUNG,
- SUPERPOSITION (SELEKTION) derart bestimmter (KENNLINIEN-) BEREICHE, wobei

a) (ABSOLUT) (IR-)RELEVANTE (Bild-) Signal-Gebiete im ANALYSATOR bestimmt werden
   - durch Vergleich der Funktion und der Differenzen mit (IR-)RELEVANZ-SCHWELLEN,
   - durch DIVERGENZ-BILDUNG, speziell zur Bestimmung der SPUR DES GRADIENTEN,
   auch zur Definition von (KENNLINIEN-)SCHALTERN oder FESTSTELLUNG DER MONOTONIE,
   sodaß eine derart schwellwert-gesteuerte RELEVANZ-SELEKTION erfolgen kann,
b) SUMMIERUNGEN verwendet werden, speziell zur INTEGRATION punktgenauer Gradienten
c) Eine RELEVANZ-SELEKTION (negative Superposition) stattfindet, und insbesondere
   - die nun irrelevante (Original-)Funktion (geglättet und) analysiert wird,
   - die (darauf bezogenen gestuften) RELEVANTEN OFFSETS analysiert werden,
d) SCHWERPUNKT-BILDUNGEN (GLÄTTUNGEN) erfolgen, speziell eine selektive Rauschminderung nach voriger SELEKTION der RELEVANZ-GEBIETE über Gradienten,
e) UNCODIERTE WERTE oder BEREICHE durch Konvention übertragen werden.

4. Verfahren nach Anspruch 1 bis 3, dadurch gekennzeichnet, daß bei festgestellter (IR-)RELEVANZ, speziell durch Merkmal-Speicherung der Funktion über bereichs-prädiktive MINIMAL-CODES, die alle TRUE/FALSE-Bedingungen (komponentenweise) realisieren und adressgleich in Bildspeichern abgelegt sein können, bei festgestellter (ABSOLUTER- ODER SCHWELLEN-IR-)RELEVANZ der Muster oder Merkmale

a) (segmentierte) CODES als STÜTZ-WERTE und OFFSETS zur Charakterisierung jedes (prädizierbaren IR-) RELEVANTEN GEBIETES (sukzessiv) übertragen werden, insbesondere in Form von DOPPEL- und MEHRFACH-STÜTZWERTEN bzw. -PRÄDIKTIONEN,
b) (segmentierte oder zusammengesetzte) CODES zur Codierung der Abweichungen im Innern des (prädizierbar IR-)RELEVANTEN GEBIETES oder ungefähr prädizierbarer (RELEVANTER) OFFSETS, speziell an Konturen, (sukzessiv) übertragen werden, und resultierende (auch fallgesteuerte Kombinationen der) Codes übertragen werden.

2

0244660

5. Verfahren nach Anspruch 1 bis 4, dadurch gekennzeichnet, daß eine oder mehrere der genannten Funktionen selbst sukzessiv bzw. bereichs-prädiktiv, verwendet, invertiert oder -speziell mit (D)PCM- kombiniert werden, insbesondere

a) Kombination mit EP-0091979-A1 (ERWARTUNGS- und RESTMENGEN-PRINZIP), speziell
   - (sukzessiver) Bestimmung der ERWARTUNGS- und REST-MENGE, incl. erwartetem GEFÄHRDUNGS- oder REST-BEREICH und darin verkürzten relativen CODES für Adressen, (Gradienten-)Amplituden, Offsets und anderen ermittelten Merkmalen,
   - die Richtung weisende, TENDENZ-PRÄDIKTION dieser Mengen,
   - (sukzessiver) Anwendung des SUPERPOSITIONS-PRINZIPS auf die erhaltenen Mengen (Addition/Subtraktion, Bildung von Schnitt- und Vereinigungs-Mengen) speziell zur Gewinnung der (IR-)RELEVANTEN GEBIETE und REKONSTRUKTION des Originals,
   - DOPPEL- und MEHRFACH-PRÄDIKTIONEN, auch zur (lokalen) Bereichs-Definition,
   - variable bereichsabhängige (PCM-) CODEWORT-LÄNGENBESTIMMUNG (-PRÄDIKTION)
   - die Übertragung von dadurch signaladaptiv reduzierten CODE-LÄNGEN.

b) Verwendung von INVERSIONEN, speziell
   - funktionale Umkehr zur SIGNAL-RÜCKGEWINNUNG
   - Vertauschungen von Reihenfolgen (in der Differenzen-Bildung)
   - einer VEREINFACHUNG durch Weglassung von Merkmalen oder Funktionen, speziell
     - ANALYSE nach genanntem Prinzip bei fehlender (Bereichs-)Prädiktion,
     - nicht punktuell identische empfangsseitige REKONSTRUKTION
     - VEREINFACHUNG DER MUSTER-ERKENNUNG durch Signal-Vorverarbeitung.

6. Verfahren nach Anspruch 1 bis 5, dadurch gekennzeichnet, daß eine oder mehrere der Funktionen ANALOG statt digital arbeiten bzw. umgewandelt oder kombiniert werden, oder eine Vorverarbeitung stattfindet, speziell eine

a) (senderseitig analoge) RAUSCH-UNTERDRÜCKUNG, speziell nach RELEVANZ-SELEKTION,
b) (senderseitig analoge) Differenzen-Bildung (=DIFFERENTIAL-BILDUNG), auch bei Analog-Signalen, zur (senderseitigen) Ermittlung von in einem Analog-Signal entsprechend enthaltenen (IR-) RELEVANZ-PARAMETERN und -MERKMALEN,
c) (senderseitig analoge) Summen-Bildung (Integration),
d) Signal-Verzerrung, insbesondere KOMPRESSION.

7. Verfahren nach Anspruch 1 bis 6, wonach ein sendeseitig als nach dem Regelungs-Prinzip als optimal erkannter WEG präcodiert wird (Programm-Selektion).

3

I)

Q.-Steuerung (konventionell)

Signal

QUANTISIERER

C O D E R

PRÄDIKTOR (singulär)

0244560

8710522 7.0

1/6

II)

S

Signal
S

QUANTISIERER (gesteuert)

C O D E R (gesteuert)

SPEICHER- Bereiche

$P_{min (max)}$

PRÄDIKTIONEN
P1, P2,...    Pn

$P_{max (min)}$

II.1a)

**L** Luminanz

generell: Signalwert

$P_{max}$

$P_{min}$

$\Delta t$

Beobachtungsbreite

1   2   3   4   $t_5$  6   7   8   9   10   11   12   13   14   $t_n$

II.1b)

**P** Prädiktionsbereiche

$P_{min}$ (x)

$P_{max}$ (o)

(für $\Delta t = \pm 2$ )

Präd.
Bereich
(t = $t_5$)

1   2   3   4   $t_5$  6   7   8   9   10   11   12   13   14   $t_n$

III)

0244660
87105327

# III.1a)

LUMINANZ-
SPRUNG
(Bildkante)

$\Delta$ PRÄD

$P_{max}$

$P_{min}$

$S_n$

# III.1b)

Quantis. —
$P_{min}$ —
$P_{max}$ —

$Q_{max}$

INNERER (hier: INTRAFRAME-)
-BEOBACHTUNGSBEREICH $(S = S_6)$

$Q_{min}$

$S = S_6$

$S_n$
(ORT)

| bit-Anzahl: | 1 | 1 | 2 | 2 | 3 | 3 | 3 | 2 | 2 | 2 | 1 | 1 | 0 | 0 |
|---|---|---|---|---|---|---|---|---|---|---|---|---|---|---|

V O R H A L T E - B E R E I C H   (hier: aus Z-Gradient)

(*Satz von* WEIERSTRASS): *Jede auf einer abgeschlossenen, beschränkten Menge $\mathfrak{M}$ stetige Funktion besitzt auf $\mathfrak{M}$ ein Minimum und ein Maximum, d. h. es gibt mindestens je eine Stelle $X_1 \in \mathfrak{M}$ und $X_2 \in \mathfrak{M}$, so daß*

$$f(X_1) = \operatorname{Min} f(X) = g, \qquad f(X_2) = \operatorname{Max} f(X) = G$$

*gilt, wo g und G untere und obere Grenze von $f(X)$ auf $\mathfrak{M}$ sind.*

(*Allgemeines Konvergenzprinzip von* CAUCHY): *Ist $f(X)$ definiert auf einer Menge $\mathfrak{M}$ und ist $X_0$ ein Häufungspunkt von $\mathfrak{M}$, so konvergiert $f(X)$ für $X \to X_0$ dann und nur dann gegen einen Grenzwert, wenn es zu jedem $\varepsilon > 0$ ein $\delta = \delta(\varepsilon) > 0$ gibt, so daß*

$$|f(X') - f(X'')| < \varepsilon$$

*ist für alle Punkte $X' \in \mathfrak{M}$ und $X'' \in \mathfrak{M}$, für die*

$$\overline{X'X_0} < \delta \quad und \quad \overline{X''X_0} < \delta$$

*gilt.*